# EUROPEAN PATENT APPLICATION

(11) **EP 3 890 060 A1**
(43) Date of publication of application: **06.10.2021**
(21) Application number: 18941267.9
(22) Date of filing: 29.11.2018
(51) Int. Cl.: H01M 4/131, H01M 4/133, H01M 4/485, H01M 4/505, H01M 4/525, H01M 4/587, H01M 10/0525, H01M 2/10

(54) **ELECTRODE, CELL, AND CELL PACK**

(71) Applicant: KABUSHIKI KAISHA TOSHIBA, Minato-ku Tokyo 105-0023 (JP)
(72) Inventor: WATANABE, Yuki, Kawasaki-shi, Kanagawa 212-0013 (JP); TANAKA, Masanori, Kawasaki-shi, Kanagawa 212-0013 (JP); HAGIWARA, Asuna, Kawasaki-shi, Kanagawa 212-0013 (JP)
(74) Representative: Hoffmann Eitle
(86) International application number: PCT/JP2018/044008
(87) International publication number: WO 2020/110260

(57) **Abstract**

According to one embodiment, an electrode including an active material-containing layer containing electrode active material particles is provided. The electrode active material particles include primary particles of an electrode active material including lithium nickel cobalt manganese oxide represented by LiₐNiₓCo_{y}Mn_{z}O₂, where 0.9 ≤ a ≤ 1.2, x + y + z = 1, first secondary particles formed of plural of the primary particles that are agglomerated and including a first void, and second secondary particles formed of plural of the primary particles that are agglomerated and not including a void of a size equal to or greater than the first void. A first particle diameter corresponding to a maximum frequency A in a particle size distribution of particles including the electrode active material particles is greater than a second particle diameter corresponding to a local maximum frequency B in a range of particle diameters of 0.1 µm or greater and less than 2 µm. A ratio C/F between a particle size ratio C and a vacancy ratio F is 10 g/mL or greater and less than 50 g/mL, where the particle size ratio C is a ratio A/B between the maximum frequency A and the local maximum frequency B, and the vacancy ratio F is a ratio D/E between a pore volume D in units of mL/g obtained by mercury porosimetry in the active material-containing layer and a void fraction E. A ratio G/H between an average distance G between the primary particles in the first secondary particles and an average particle size H of the primary particles included in the first secondary particles is 1.05 or greater and less than 1.2.

## Description

### FIELD

Embodiments described herein relate generally to an electrode, a battery, and a battery pack.

### BACKGROUND

In recent years, development of lithium-ion batteries for onboard application on cars, such as electric automobiles, has accelerated. Accordingly, development of nickel-cobalt-manganese-based active material (NCM active material) intended to achieve high energy density has progressed. Specifically, active materials having large-sized secondary particles and high tap density are often used. However, since an initial charge-discharge efficiency becomes reduced as the secondary particle size increases, the energy density does not substantially increase as greatly than expected. Furthermore, since the dispersion property of Li ions inside the secondary particles is reduced as the tap density increases, the input-output performance is also reduced. Moreover, in the NCM active material, when cracking of particles occurs due to repetition of charge-discharge cycles, impurities from the time of synthesis, such as residual alkali, may flow out of the secondary particles. Due to the flown-out impurities, for example, gases such as HF, will generate.

### CITATION LIST

### PATENT LITERATURE

Patent Literature 1: International Publication No. 2017-073682
Patent Literature 2: International Publication No. 2016-195036
Patent Literature 3: International Publication No. 2013-084851
Patent Literature 4: International Publication No. 2017-175697

### SUMMARY

### TECHNICAL PROBLEM

An object is to provide an electrode that can realize a battery excellent in all of the input-output performance, energy density, and life performance, a battery excellent in all of the input-output performance, energy density, and life performance, and a battery pack including the battery.

### SOLUTION TO PROBLEM

According to one embodiment, an electrode including an active material-containing layer containing electrode active material particles is provided. The electrode active material particles include primary particles of an electrode active material including lithium nickel cobalt manganese oxide represented by LiₐNiₓCo_{y}Mn_{z}O₂, where 0.9 ≤ a ≤ 1.2, x + y + z = 1, first secondary particles formed of plural of the primary particles that are agglomerated and including a first void, and second secondary particles formed of plural of the primary particles that are agglomerated and not including a void of a size equal to or greater than the first void. A first particle diameter corresponding to a maximum frequency A in a particle size distribution of particles including the electrode active material particles is greater than a second particle diameter corresponding to a local maximum frequency B in a range of particle diameters of 0.1 µm or greater and less than 2 µm. A ratio C/F between a particle size ratio C and a vacancy ratio F is 10 g/mL or greater and less than 50 g/mL, where the particle size ratio C is a ratio A/B between the maximum frequency A and the local maximum frequency B, and the vacancy ratio F is a ratio D/E between a pore volume D in units of mL/g obtained by mercury porosimetry in the active material-containing layer and a void fraction E. A ratio G/H between an average distance G between the primary particles in the first secondary particles and an average particle size H of the primary particles included in the first secondary particles is 1.05 or greater and less than 1.2.

### BRIEF DESCRIPTION OF THE DRAWINGS

FIG. 1 is a cross-sectional view schematically showing an active material-containing layer included in an example of an electrode according to an embodiment;
FIG. 2 is a graph showing a particle size distribution of particles in an active material-containing layer included in an example of an electrode according to an embodiment;
FIG. 3 is a graph showing a pore size diameter distribution obtained by mercury porosimetry in an active material-containing layer included in an example of an electrode according to an embodiment;
FIG. 4 is a schematic cross - sectional view for explaining an aspect ratio of an electrode active material particle included in an electrode according to an embodiment;
FIG. 5 is a cross-sectional view of an example of a battery according to an embodiment, cut in a thickness direction;
FIG. 6 is an enlarged cross-sectional view of section Q of FIG. 5;
FIG. 7 is a partially cutaway perspective view of another example of a battery according to an embodiment;
FIG. 8 is an exploded perspective view of an example of a battery pack according to an embodiment; and
FIG. 9 is a block diagram showing an electric circuit of the battery pack shown in FIG. 8.

### DETAILED DESCRIPTION

An electrode of a form including only secondary particles formed of agglomerated first particles of an electrode active material has a high energy density, since the degree of filling by the active material is high. Furthermore, since there is little reaction between the active material and an electrolyte, the life performance is excellent. However, for lithium ions, which are the carriers, the dispersion property is poor inside the secondary particles, and thus, the input-output performance is low.

In the case where an active material in the electrode includes only primary particles, the distance of dispersive movement of lithium ions is short; therefore, the input-output performance is excellent. On the other hand, since the degree of filling by the active material within the electrode is reduced, the energy density is low. Furthermore, since the specific surface area of the active material is increased, side reactions increase, so that the life performance is deteriorated.

In the case of forming secondary particles with voids present therein as active material particles, the dispersion property of the lithium ions is increased by the voids in the particles, so that the input-output performance is high. Furthermore, since there is little reaction between the active material and the electrolyte, the life performance is excellent. Meanwhile, since the amount of the active material filled in is reduced due to the presence of the voids in the particles, the energy density is reduced.

In the case in which secondary particles and primary particles of the active material coexist in the electrode, the primary particles enter gaps between the secondary particles that are formed when the secondary particles are packed. Therefore, the energy density is increased. However, although the durability in high-temperature environment is increased due to the inclusion of the secondary particles, side reactions between the active material and the electrolyte preferentially occurs between the electrolyte and the primary particles, and thus, the life performance is low. Moreover, although the dispersion property of lithium ions in the primary particles is excellent, the dispersion of lithium ions in the secondary particles is rate-limiting, making the input-output performance on the whole low.

By intermixing the three particle states of the active material, namely, primary particles, secondary particle having voids, and secondary particles that are dense, there can be obtained a battery characteristic where all of the input-output performance, energy density, and life performance are excellent.

The embodiments will be explained below with reference to the drawings. Structures common to all embodiments are represented by the same symbols and overlapping explanations will be omitted. Also, each drawing is a typical view for explaining the embodiments and for promoting the understanding of the embodiments. Though there are parts different from an actual device in shape, dimension and ratio, these structural designs may be properly changed taking the following explanations and known technologies into consideration.

### [First Embodiment]

According to a first embodiment, an electrode including an active material-containing layer containing electrode active material particles is provided. The electrode active material particles include primary particles of an electrode active material, first secondary particles that are formed of agglomerated plural primary particles and includes a first void, and second secondary particles that are formed of agglomerated plural primary particles and do not include any void of a size equal to or greater than the first void. The electrode active material includes lithium nickel cobalt manganese oxide represented by LiₐNiₓCo_{y}Mn_{z}O₂ where 0.9 ≤ a ≤ 1.2 and x + y + z = 1. A first particle diameter corresponding to a maximum frequency A in a particle size distribution of particles including the electrode active material particles is greater than a second particle diameter corresponding to a local maximum frequency B in a range of particle diameters of 0.1 µm or greater and less than 2 µm. Taking a ratio A/B between the maximum frequency A and the local maximum frequency B as a particle size ratio C, and taking a ratio D/E between a pore volume D (unit: mL/g) obtained by mercury porosimetry in the active material-containing layer and a void fraction E as vacancy ratio F, a ratio C/F between the particle size ratio C and the vacancy ratio F is 10 g/mL or greater and less than 50 g/mL. Within the first secondary particles, a ratio G/H between an average distance G between the primary particles and an average particle size H of the primary particles is 1.05 or greater and less than 1.2.

The above electrode may be a battery electrode. Batteries capable of using the electrode include secondary batteries, for example, lithium-ion batteries. Specific examples of the secondary batteries include a nonaqueous electrolyte battery using a nonaqueous electrolyte, such as a liquid nonaqueous electrolyte containing a nonaqueous solvent and an electrolyte salt.

The electrode may further include a current collector. The active material-containing layer may be formed on one or both of reverse surfaces of, for example, a foil-shaped current collector. The current collector may include a portion on which no active material-containing layer is held. The portion that does not hold the active material-containing layer formed in the current collector may function as a current collecting tab.

The current collecting tab is not limited to the portion that does not hold the active material-containing layer in the current collector. For example, plural strip-formed portions projecting from one side of the current collector can be used as current collecting tabs. The current collecting tab may be made of the same material as the current collector. Alternatively, a current collecting tab may be prepared separately from the current collector, and connected to at least one end face of the current collector by welding or the like.

The active material-containing layer may contain an electro-conductive agent and a binder in addition to the electrode active material.

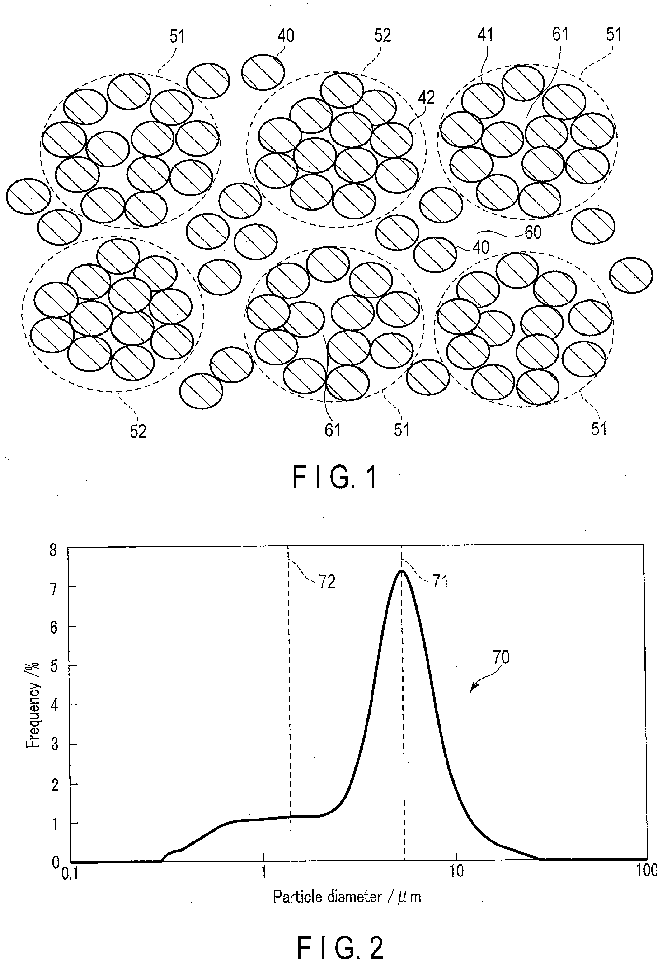

FIG. 1 schematically shows a cross section of an active material-containing layer included in an example of an electrode according to the embodiment. The active material-containing layer may contain electro-conductive agent particles or a binder, in addition to the active material particles including the primary particles of the electrode active material, the first secondary particles of the electrode active material, and the second secondary particles of the electrode active material. However, to promote an understanding, the members other than the active material particles are omitted in FIG. 1.

The active material-containing layer includes primary particles 40, first secondary particles 51, and second secondary particles 52.

The first secondary particle 51 is formed of plural agglomerated primary particles 41. The first secondary particle 51 includes a first void 61 inside thereof. The size of the first void 61 may be equal to or greater than the primary particles 41 included in the first secondary particle 51. The second secondary particle 52 is formed of plural agglomerated primary particles 42. The second secondary particle 52 does not include a void of a size equal to or greater than the first void 61. Thus, the primary particles 42 are closely packed in the second secondary particle 52, and the second secondary particle 52 does not have a significant void.

Of the active material primary particles, the primary particles 40 that do not form secondary particles can be independently present in a single state within the active material-containing layer. A method for determining whether an active material primary particle included in the active material-containing layer is an independent primary particle 40 without being agglomerated, or a primary particle included in an active material secondary particle will be described later. The term "primary particle(s) included in an active material secondary particle" described here includes both the primary particle (s) 41 in the first secondary particle 51 and the primary particle(s) 42 in the second secondary particle 52.

By virtue of the active material primary particles and the active material secondary particles (first secondary particles 51 and second secondary particles 52) coexisting, the independent primary particles 40 enters gaps 60 formed in the electrode when the active material secondary particles are packed, and thus, the energy density of the electrode is high. Furthermore, since the first void 61 is present in the first secondary particle 51, the dispersion of lithium ions in the secondary particles is less rate-limiting. As a result, since the dispersion property within the electrode is excellent on the whole, excellent input-output performance can be exhibited. Furthermore, since the primary particles 42 are closely packed in the second secondary particle 52, the second secondary particle 52 serves to maintain a skeletal frame of the active material-containing layer. Therefore, even after the active material is expanded and contracted upon charge and discharge, the deterioration of the active material-containing layer can be suppressed. Therefore, a high life performance can be exhibited.

In an electrode in which the ratio C/F between the particle size ratio C and the vacancy ratio F is 10 g/mL or greater and less than 50 g/mL, the content proportion of the primary particles, the first secondary particles, and the second secondary particles is well balanced. Such an electrode can provide a high energy density and exhibit a high input-output performance.

When the ratio C/F is less than 10 g/mL, a state in the active material-containing layer, in which the first secondary particles, the second secondary particles, and the primary particles coexist, may be a state where a proportion of the primary particles is great and the first voids inside the first secondary particles are many or large first voids. When the ratio C/F is 10 g/mL or greater, the proportion of the primary particles is not too great, and the first voids are not too many or too large; therefore, a satisfactory energy density can be obtained. When the ratio C/F is 50 g/mL or greater, the state in the active material-containing layer, in which the first secondary particles, the second secondary particles, and the primary particles coexist, may be a state where the active material secondary particles (including both the first secondary particles and the second secondary particles) are present in great proportion, and the first voids inside the first secondary particles are few or small. When the ratio C/F is less than 50 g/mL, the proportion of the active material secondary particles is not too great, and a sufficient number of first voids having a sufficient size are present. Therefore, the dispersion property of the lithium ions in the electrode is good, and an excellent input-output performance can be exhibited.

The particle size ratio C corresponds to a ratio A/B between a maximum frequency A in a particle size distribution of particles, such as electrode active material particles included in the active material-containing layer (including the primary particles, the first secondary particles, and the second secondary particles of the electrode active material) and a local maximum frequency B in a range of particle diameters of 0.1 µm or greater and less than 2 µm. The particle size distribution can be obtained with respect to the active material-containing layer through a particle size distribution measurement by a laser diffraction scattering method, which is described later.

A first particle diameter corresponding to the greatest frequency A is greater than a second particle diameter corresponding to the local maximum frequency B. The first particle diameter may be 2 µm or greater.

FIG. 2 is a graph showing a particle size distribution of particles in the active material-containing layer included in an example of the electrode according to the embodiment. The horizontal axis of the graph indicates the particle diameter (particle size), and the vertical axis indicates the frequency of measurement of each particle diameter. In the graph of FIG. 2, the particle size distribution curve has a maximum peak 70 at a particle diameter of about 7 µm to 8 µm. The frequency of the first particle diameter corresponding to a peak top position 71 of the greatest peak 70 is the greatest frequency A. The particle size distribution curve indicated as an example includes a portion in which the frequency of the particle diameter exhibits a local maximum value in a range of the particle diameter of 0.1 µm or greater and less than 2 µm. A position 72 along the horizontal axis of the graph corresponds to a position where the frequency in that range exhibits the local maximum value. The frequency of the second particle diameter corresponding to the position 72 is the local maximum frequency B. The ratio A/B of the frequencies, namely, the particle size ratio C, is preferably 5 or greater and less than 15.

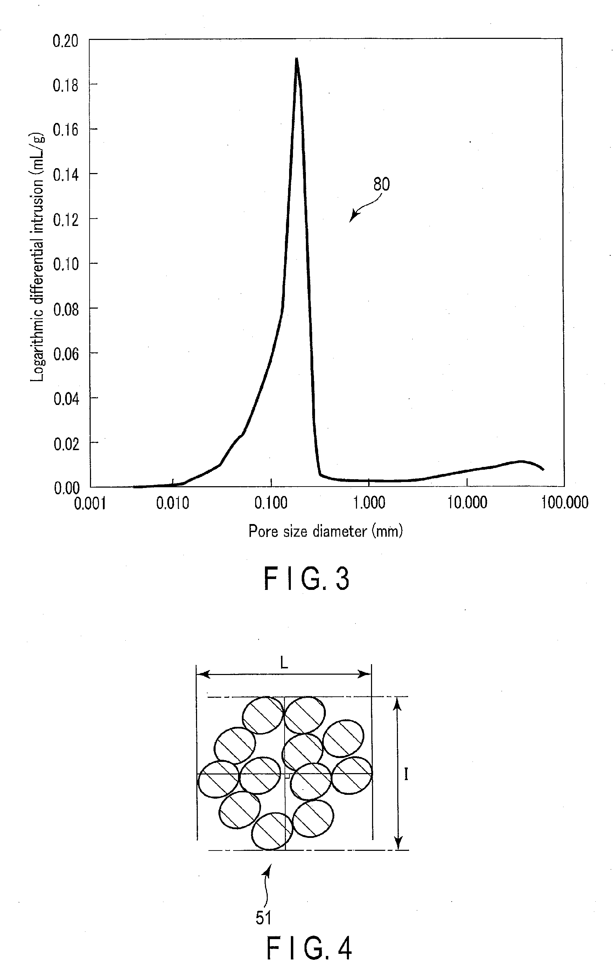

The vacancy ratio F corresponds to a ratio D/E between a pore volume D and a void fraction E obtained by mercury porosimetry in the active material-containing layer. A numerical value in units of mL/g is used as a value of the pore volume D. A numerical value represented as a decimal numeral, not a percentile notation, is used as the void fraction E. FIG. 3 is a graph showing a pore size diameter distribution obtained by the mercury porosimetry in the active material-containing layer included in an example of the electrode according to the embodiment. In the graph of FIG. 3, the horizontal axis represents the pore size diameter, and the vertical axis represents the logarithmic differential intrusion. The pore size diameter distribution curve shown in the graph of FIG. 3 has a peak 80. The integral value of an area below a curve in the graph in which the vertical axis is converted to differential intrusion corresponds to the pore volume D in the subject active material-containing layer. Details of the measurement by the mercury porosimetry will be described later. The vacancy ratio F is preferably 0.35 mL/g or greater and less than 0.4 mL/g.

The ratio C/F reflects the maximum frequency A and the local maximum frequency B in the particle size distribution of the particles including the electrode active material particles, and also reflects the pore volume D and the void fraction E obtained by the mercury porosimetry in the active material-containing layer. Each of the parameters A, B, D, and E may vary depending on the composition of the electrode active material and the electrode system. On the other hand, the ratio C/F is not influenced by the active material composition or the electrode system, as long as the active material that contains lithium nickel cobalt manganese oxide mentioned above is used. In other words, the performance described above is obtained commonly over electrodes of different systems, as long as the ratio C/F falls within the numerical range mentioned above.

The average particle size of the secondary particles of the active material containing lithium nickel cobalt manganese oxide is preferably 5 µm or greater and less than 14 µm. The secondary particles here include both the first secondary particles and the second secondary particles. The average particle size of the primary particles is preferably 0.4 µm or greater and less than 0.8 µm. The primary particles here include both primary particles that form active material secondary particles (for example, the primary particles 41 or the primary particles 42 shown in FIG. 1) and independent primary particles that are not included in the secondary particles (for example, the primary particles 40 shown in FIG. 1). The first void in the first secondary particle is of the same size or larger than the primary particle.

When the ratio G/H between an average distance G between primary particles in the first secondary particle and an average particle size H of the primary particles is 1.05 or greater and less than 1.2, the size of the first void in the first secondary particle is appropriate. Therefore, when the ratio G/H falls within the aforementioned range, both a high energy density and a high input-output performance can be achieved. Numerical values represented in matching units are used as the average distance G and the average particle size H. For example, the ratio G/H may be a ratio obtained when a numerical value in µm units is used as the average distance G and a numerical value in µm units is used as the average particle size H.

The average particle size H of primary particles is an average primary particle size of only the primary particles included in the first secondary particles (for example, the primary particles 41 shown in FIG. 1), among the primary particles included in the electrode active material particles. On the other hand, the average primary particle size H of the first secondary particles may correspond to an average particle size of all primary particles included in the electrode active material that includes lithium nickel cobalt manganese oxide, including the other primary particles included in the electrode active material particles. In other words, the average primary particle size of the primary particles included in the first secondary particles, the average primary particle size of the primary particles included in the second secondary particles, and the average particle size of the independent primary particles may be substantially the same. The average particle size H of the primary particles included in the first secondary particles is preferably 0.4 µm or greater and less than 0.8 µm.

An average particle strength of the secondary particles of the active material including lithium nickel cobalt manganese oxide is preferably 50 Mpa or greater and less than 150 Mpa. The average particle strength here means an average particle strength in active material secondary particles including both the first secondary particles and the second secondary particles, for example, a sample in which both the first secondary particles and the second secondary particles are mixed. The particle strength of the secondary particles can be obtained by a particle strength measurement described later.

The electrode active material contains lithium nickel cobalt manganese oxide expressed by LiₐNiₓCo_{y}Mn_{z}O₂ (0.9 ≤ a ≤ 1.2, x + y+z = 1) as a first active material, and may further contain another compound as a second active material. Examples of the compound that may be contained as the second active material include lithium-containing cobalt oxide, lithium-containing manganese oxide, lithium-containing nickel oxide, lithium-containing nickel-cobalt composite oxide, lithium-containing manganese-cobalt composite oxide, and lithium-containing iron phosphate. The other compounds mentioned above may have any particle state.

The first active material contained in the electrode active material may include lithium nickel cobalt manganese oxide of one composition mentioned above, or may include lithium nickel cobalt manganese oxide of two or more compositions. The second active material may be one compound, or a mixture of two or more compounds.

A content of lithium nickel cobalt manganese oxide (the first active material) in the electrode active material is preferably 70% by weight or more and 100% by weight or less of the total weight of the electrode active material contained in the active material-containing layer, for example, the total weight of the first active material and the second active material.

Examples of the electro-conductive agent that may be used in the active material-containing layer include carbon materials, such as acetylene black, ketjen black, lamp black, furnace black, graphite, carbon fiber, and graphene. Of these materials, one selected from the group consisting of acetylene black, ketjen black, lampblack, and furnace black is preferably included in the active material-containing layer. As the electro-conductive agent, one electro-conductive agent, or two or more electro-conductive agents among the aforementioned examples may be included in the active material-containing layer.

The binder used in the active material-containing layer can bind the active material and the current collector. Examples of the binder include polytetrafluoroethylene (PTFE), polyvinylidene fluoride (PVdF), fluorine rubber, styrene-butadiene rubber (SBR), polypropylene (PP), polyethylene (PE), a binder having an acrylic copolymer as a main component, and carboxymethyl cellulose (CMC).

A proportion of the electrode active material, electro-conductive agent, and binder in the active material-containing layer is preferably 70% by weight or more and 96% by weight or less, 1% by weight or more and 20% by weight or less, and 1% by weight or more and 10% by weight or less, respectively. The proportion of the electrode active material is more preferably from 90% by weight to 95% by weight. The proportion of the electro-conductive agent is more preferably from 3% by weight to 7% by weight. The proportion of the binder is more preferably from 1% by weight to 5% by weight.

For the current collector, an aluminum foil or aluminum alloy foil is preferably used. The purity of the aluminum foil is preferably 99% or higher. The aluminum alloy is preferably an alloy containing an element such as magnesium, zinc, or silicon. Meanwhile, a content of transition metals like iron, copper, nickel, and chromium is preferably 1% or less.

### <Manufacturing Method>

The electrode according to the embodiment can be obtained as follows, for example. By applying a physical force to a material for configuring the active material-containing layer including secondary particles of the electrode active material from outside, a state in which secondary particles and primary particles of the active material coexist can be obtained. Voids can be provided within some of the secondary particles, for example, by applying a force to the inside of the active material-containing layer. When producing an electrode, by performing such treatments, it is possible to obtain the aforementioned electrode including the active material-containing layer that includes the independent primary particles, first secondary particles, and second secondary particles.

As materials for configuring the active material-containing layer, the aforementioned electrode active materials, electro-conductive agents, and binders may be used. As the electrode active material, secondary particles of lithium nickel cobalt manganese oxide are prepared. As secondary particles of the active material prepared here, for example, secondary particles that do not include a void of a size equal to or greater than the first void is used. In other words, secondary particles not having any void of a size equal to or greater than primary particles forming the secondary particles, for example, secondary particles having tightly packed primary particles, are prepared as secondary particles of the active material. These materials are mixed with an organic solvent, such as N-methylpyrrolidone (NMP), to prepare a paste-form electrode coating fluid (electrode slurry). As the current collector, for example, a strip-shaped aluminum foil is prepared. The electrode coating fluid is applied onto one or both of reverse surfaces of the current collector, and a coat of the electrode coating fluid is dried to form an active material-containing layer on the current collector. The strip-formed body obtained after drying is press-molded and cut to predetermined dimensions, whereby an electrode can be obtained. Optionally, a current collecting tab independent of the current collector may be electrically connected to the electrode.

A physical force is applied from outside by a dry method using a ball mill or a beads mill, to the materials for configuring the active material-containing layer, namely, powders including electrode active material (secondary particles), or a mixed powder of the electrode active material (secondary particles), the electro-conductive agent and the binder, before mixing the materials with the solvent. Alternatively, a physical force is applied from outside by a wet method using a beads mill or a jet mill, to a mixture coating fluid or dispersion liquid (the aforementioned electrode coating fluid) obtained by dissolving or dispersing the materials for configuring the active material-containing layer into a solvent. When a physical force is applied from outside to the mixture including the secondary particles of the electrode active material, some of the secondary particles crumble, so that the state in which primary particles and secondary particle of the active material coexist can be obtained.

Furthermore, a void can be produced in some of the secondary particles of the active material or a small void originally existing in the secondary particles can be expanded, by applying to the obtained coating fluid or the electrode an ultrasonic treatment, which applies a force to the inside of the coating fluid or the electrode via a liquid or gas as a medium, or a treatment using a pressurizing apparatus. Specifically, when the force is applied to the inside, some of the primary particles constituting some of the secondary particles are pushed out from the inside, and space left after the primary particles are pushed out becomes a void inside the secondary particles. The treatment of applying a force to the inside of the electrode using ultrasonic waves or a pressurizing apparatus may be performed for an electrode group or a battery, after the electrode group is produced using the electrodes or the battery is produced using the electrodes. In addition, the void within the secondary particles can be increased by break-in charge-discharge by repeating charge and discharge of the battery within a range of a relatively low state of charge (SOC).

When the output of the irradiated ultrasonic waves is increased or the force applied by pressurizing is increased, or the treatment time is lengthened, the size and the number of voids generated in the secondary particle are increased.

Herein, the small void present within the secondary particles before the force is applied to the inside of the electrode is, for example, a void having a size that is not equal to or larger than the first void in the second secondary particle, and the void is not deemed to be a significant void. The secondary particle including such an insignificant void may correspond to the second secondary particle.

Thus, some of the secondary particles of the electrode active material containing lithium nickel cobalt manganese oxide become crumbled to become primary particles, and a state is achieved where voids in some of the remaining secondary particles are increased. As a result, an electrode of a state in which primary particles, first secondary particles, and second secondary particles are mixed is obtained.

### <Measurement Method>

Various measurement methods for the electrode according to the embodiment will be described below.

### (Pretreatment)

In the case in which an electrode to be measured is configured inside a battery, such as a nonaqueous electrolyte battery, the electrode is taken out through the following procedure, and pretreatment is performed on the electrode taken out.

First, the nonaqueous electrolyte battery is disassembled in an argon-filled glove box of an atmosphere of a dew point of -60 °C or lower, and the electrode to be measured is taken out from the nonaqueous electrolyte battery. Then, the taken-out electrode is washed with methyl ethyl carbonate (MEC). Then, the washed electrode is dried in an atmosphere of 25°C and at a gauge pressure of -90 Pa. The dried electrode is subjected to various measurements explained below. Hereinafter, the electrode to be measured is simply referred to as the "electrode".

### (Measurement of particle size distribution in active material-containing layer)

The particle size distribution within the active material-containing layer can be measured using the particle size distribution measurement apparatus Microtrac 3000 II manufactured MictrotracBEL, by a laser diffraction scattering method.

From the electrode dried in the pretreatment, the active material-containing layer is dislodged using, for example, a spatula. The dislodged powder-form active material-containing layer sample is loaded into a measurement cell, which is filled with N-methylpyrrolidone, up until a measurable concentration is reached. To the measurement cell including N-methylpyrrolidone and the active material-containing layer sample dissolved therein, ultrasonic waves are irradiated at conditions of 50 W output and 5 minutes. By irradiating ultrasonic waves at such a condition for a short time, agglomeration between electro-conductive agent particles and active material particles can be resolved without altering the states of the first secondary particles and second secondary particles. After performing the ultrasonic wave treatment, measurement is begun. Thereby, the particle size distribution of the active material-containing layer can be obtained.

### (Measurement of a pore volume and a void fraction in the active material-containing layer by mercury porosimetry)

Procedures for obtaining a pore volume and a void fraction in the active material-containing layer by the mercury porosimetry will be explained below.

The electrode dried in the pretreatment may be used as a sample. As the pore distribution-measuring apparatus, for example, Autopore 9520 manufactured by SHIMADZU CORPORATION can be used. When performing the measurement, one sample described above is cut into a size of about 25 mm-width, which is folded and put in a standard cell, and the cell is inserted into a measuring chamber. The measurement is performed at conditions of an initial pressure of 20 kPa (about 3 psia, corresponding to a pore diameter of about 60 µm) and a final pressure of 414000 kPa (about 60000 psia, corresponding to a pore diameter of about 0.003 µm) . In the pore size distribution obtained according to a mercury intrusion method, not only is the pore size of the active material-including layer reflected, but also the pore size of the electrode current collector. The pore size of the current collector, however, is sufficiently smaller than that of the positive electrode active material-including layer, and the proportion of the pores of the current collector that exist is low. Thus, the pore size of the current collector can be ignored. The pore volume (D) is calculated based on the obtained graph of the pore size distribution.

A value of a ratio of the amount of intruded mercury when mercury is filled into pores of a diameter of about 60 µm or less corresponding to the initial pressure to the volume of the sample (amount of intruded mercury/volume of sample) is taken as the void fraction (E).

### (Measurement of the average particle size of secondary particles and the average particle size of primary particles in the electrode active material)

The average particle sizes of secondary particles and primary particles included in the electrode active material-containing layer can be measured through the following procedures. The primary particle here means a particle of a minimum unit that is independently present within the active material-containing layer. The secondary particle means an agglomerate formed by the primary particles gathering together. The secondary particle is preferably a particle having a particulate shape of an aspect ratio of 1 or greater and less than 1.3. The aspect ratio here means a value of L/I, where L denotes a longest diameter (major axis) of the secondary particle, and I denotes a diameter in a direction perpendicular to the direction of L. When the aspect ratio is 1.3 or greater, the particle (s) can be considered as being an assembly of two or more secondary particles agglomerated together, or independent primary particles formed from a secondary particle that had crumbled. Regarding the distinction between these two types of particles having an aspect ratio of 1.3 or greater, in the case a void is present at the grain boundary, the particle can be determined as being an independent primary particle, while in other cases, it can be determined that two or more secondary particles are agglomerated. The major axis of the independent primary particle here is defined as primary particle size. Since the aspect ratio is a value obtained by dividing the major axis by the minor axis, it cannot be less than 1.

FIG. 4 shows a cross-sectional view schematically illustrating the aspect ratio. In FIG. 4, a cross section of a first secondary particle 51 is shown as an example. However, the active material particle determined to be a secondary particle through examining the aspect ratio may be a second secondary particle. Furthermore, through examining the aspect ratio, the subject may be determined to be independent primary particles that do not maintain a secondary particle but are simply arranged in proximity. As illustrated, when examining the particle cross-section, the longest diameter is taken as L, and the diameter in a direction perpendicular to the longitudinal direction is taken as I. The ratio of the major axis L to the minor axis I (L/I) is calculated to examine the aspect ratio.

A method of measuring an average particle size will be described below. After the pretreatment, the electrode is subjected to abrasion, so that, for example, a cross-section orthogonal to the principal surface of the current collector is exposed. Then, the abraded cross-section of the electrode is photographed. A cross-sectional photograph of the electrode can be obtained by photographing with a scanning electron microscope (SEM). At this time, ten viewing fields, each including ten or more secondary particles, are examined, and five secondary particles are selected from each viewing field. An average of the particle sizes (secondary particle sizes) of the selected 50 secondary particles in total is calculated as the average particle size of the active material secondary particles. Five primary particles are selected from each of the examined ten viewing fields. Both the independent primary particles and the primary particles included in the secondary particles may be subjected to selection. However, in the case of determining an average particle size H of the primary particles included in the first secondary particles, it is desirable to make selections from the primary particles included in the first secondary particles having the first void. The average of the particle sizes of the selected 50 primary particles in total is defined as the average particle size of the active material primary particles. To obtain a viewing field including ten or more secondary particles, it is preferable to take a photograph with an SEM at a magnification of 3000.

### (Measurement of average distance between primary particles present in the first secondary particle)

Of the secondary particles of the aspect ratio of 1 or greater and less than 1.3 confirmed by the cross-sectional SEM photograph obtained in the manner described above, a secondary particle including a significant void inside can be determined as a first secondary particle including a first void. The significant void here means a void having a size of about the same degree as a primary particle constituting the subject secondary particle or a greater size. An average value G of a distance g between primary particles in at least ten portions is calculated, where g denotes a distance between any two of the primary particles constituting one first secondary particle. As the at least ten portions for examining the distance g between primary particles, two or more portions are preferably selected from the same first secondary particle. As the distance g between the selected two primary particles, the shortest distance between the primary particles is measured.

### (Particle Strength Measurement of Electrode Active Material Secondary Particles)

From the electrode after drying in the pretreatment, the active material-containing layer is dislodged using a spatula and the like, and a sample in powder-form is obtained. Then, the sample is placed on a jig of a measurement apparatus, and tapped, so that the surface thereof can be flattened. As the measurement apparatus, Shimadzu Micro Compression Testing Machine (Model No: MCT-211) manufactured by Shimadzu Corporation is used. The sample on the measurement jig is observed through a microscope, and any ten of the secondary particles are selected. Then, the secondary particles are put in the apparatus one at a time, a pressure is continuously applied until the secondary particle is broken, and a compressive strength when the secondary particle had broken is measured. This measurement is performed on all of the ten secondary particles, and an average of the obtained compressive strengths is determined as an average particle strength of the secondary particles.

### (Measurement of composition of active material)

The composition of the active material contained in the electrode can be measured by powder X-ray diffraction (XRD) measurement, as follows.

From the electrode after drying in the pretreatment, the active material-containing layer is dislodged using, for example, a spatula and the like, and a powder-form sample is obtained.

By powder X-ray diffraction measurement of the powder-form sample, a crystal structure of the active material is identified.

The measurement is performed within a measurement range where 2θ is from 10 degrees to 90 degrees, using Cukα ray as a radiation source. By this measurement, X-ray diffraction patterns of compounds contained in the selected particles can be obtained.

As an apparatus for powder X-ray diffraction measurement, SmartLab manufactured by Rigaku is used, for example. Measurement is performed under the following conditions:
X ray source: Cu target
Output: 45 kV, 200 mA
soller slit: 5 degrees in both incident and received light
step width: 0.02 deg
scan speed: 20 deg/min
semiconductor detector: D/teX Ultra 250
sample plate holder: flat glass sample plate holder (0.5 mm thick)
measurement range: range of 10° ≤ 2θ ≤ 90°

When another apparatus is used, in order to obtain measurement results equivalent to those described above, measurement using a standard Si powder for powder X-ray diffraction is performed, and measurement is conducted with conditions where peak intensities and peak-top positions correspond to those obtained using the above apparatus.

Subsequently, the sample containing the active material is observed with a scanning electron microscope. SEM observation is also desirably performed in an inert atmosphere of argon or nitrogen, avoiding contact with air.

In a SEM observation image at 3000 times magnification, several particles having the forms of primary particles or secondary particles examined within the field of view are selected. Whereupon, the particles are selected such that the particle size distribution of the selected particles is spread widely as possible. For the observed active material particle, the species of the constituent elements and composition of the active material are specified by energy dispersive X-ray spectroscopy (EDX spectroscopy). Accordingly, the species and amounts of the elements other than Li among the elements contained in the selected particles can be specified. Similar operations are performed for each of the plural active material particles, thereby judging the state of mixing of the active material particles.

Subsequently, the powder-form sample extracted from the active material-containing layer as mentioned above is washed with acetone and dried. The obtained powder is dissolved with hydrochloric acid, and after removing the electro-conductive agent by filtration, the solution is then diluted with ion exchange water to prepare a measurement sample. The ratio of metal contained in the measurement sample is calculated by inductively coupled plasma atomic emission spectroscopy (ICP AES) .

In the case where plural species of active materials are present, their mass ratio is estimated from the content ratio of elements unique to each active material. The ratio of the unique elements and active material mass is judged from the composition of the constituent elements determined by energy dispersive X-ray spectroscopy. For example, in a measurement sample obtained from the active material-containing layer, along with lithium nickel cobalt manganese oxide as the first active material, another compound as the second active material may be included. In such a case, the chemical formula and formula weight for each of the first and second active materials is calculated from the obtained metal ratio, and the weight ratio of the first and second active materials included in a predetermined amount of extracted active material-containing layer is determined.

According to the first embodiment, provided is an electrode including an active material-containing layer containing electrode active material particles. The electrode active material particles include primary particles of an electrode active material including lithium nickel cobalt manganese oxide represented by LiₐNiₓCo_{y}Mn_{z}O₂ where 0.9 ≤ a ≤ 1.2 and x + y + z = 1, first secondary particles formed through agglomeration of plural of the primary particles and including a first void, and second secondary particles formed through agglomeration of plural of the primary particles and not including a void of a size equal to or larger than the first void. A first particle diameter corresponding to a maximum frequency A in a particle size distribution of particles including the electrode active material particles is larger than a second particle diameter corresponding to a local maximum frequency B in a range of particle diameters of 0.1 µm or greater and less than 2 µm. Taking a ratio A/B between the maximum frequency A and the local maximum frequency B as a particle size ratio C, and taking a ratio D/E between a pore volume D in mL/g units obtained by mercury porosimetry in the active material-containing layer and a void fraction E as vacancy ratio F, a ratio C/F between the particle size ratio C and the vacancy ratio F in mL/g units is 10 g/mL or greater and less than 50 g/mL. Within the first secondary particles, a ratio G/H between an average distance G between the primary particles and an average particle size H of the primary particles is 1.05 or greater and less than 1.2. The electrode having the above configuration can realize a battery excellent in all of the input-output performance, energy density, and life performance.

### [Second Embodiment]

According to a second embodiment, a battery is provided. The battery includes a positive electrode and a negative electrode. The positive electrode includes the electrode according to the first embodiment.

The battery according to the embodiment may further include an electrolyte.

The secondary battery according to the second embodiment may further include a separator provided between the positive electrode and the negative electrode. The negative electrode, the positive electrode, and the separator may configure an electrode group. For example, the electrode group may have a stacked structure. Alternatively, the electrode group may have a wound structure. The electrode group may hold the electrolyte.

The battery may further include a positive electrode terminal and a negative electrode terminal. The positive electrode terminal may function as a conductor for electron transfer between the positive electrode and an external circuit, by having a part thereof being electrically connected to a part of the positive electrode. The positive electrode terminal may be connected to, for example, the current collector of the positive electrode (the positive electrode current collector), in particular, a portion serving as a current collecting tab (the positive electrode tab). Similarly, the negative electrode terminal can function as a conductor for electron transfer between the negative electrode and an external terminal, by having a part thereof being electrically connected to a part of the negative electrode. The negative electrode terminal may be connected to, for example, the current collector of the negative electrode (the negative electrode current collector), in particular, a portion serving as a current collecting tab (the negative electrode tab).

The battery may further include exterior parts. The exterior parts can house the electrode group and the electrolyte. The nonaqueous electrolyte may be impregnated into the electrode group, within the exterior parts. A part of the positive electrode terminal and a part of the negative electrode terminal may extend out from the exterior parts.

The battery according to the embodiment may be, for example, a lithium ion secondary battery. The battery includes, for example, nonaqueous electrolyte batteries containing nonaqueous electrolyte(s) as the electrolyte.

Next, each of the components that may be included in the battery according to the second embodiment will be described in detail.

### (Positive Electrode)

The positive electrode may include a positive electrode current collector and a positive electrode active material-containing layer.

As the positive electrode current collector, for example, the current collector described in the first embodiment may be used.

As the positive electrode active material-containing layer, for example, the active material-containing layer described in the first embodiment may be used.

As such, details of the positive electrode are the same as the details of the electrode according to the first embodiment. Due to overlap of the description, detailed description are omitted.

### (Negative Electrode)

The negative electrode may include a negative electrode current collector and a negative electrode active material-containing layer.

As the negative electrode current collector, an aluminum foil or aluminum alloy foil may be used. The purity of the aluminum foil is preferably 99% or higher. The aluminum alloy is preferably an alloy containing an element such as magnesium, zinc, or silicon. Meanwhile, a content of transition metals like iron, copper, nickel, and chromium is preferably 1% or less.

The negative electrode active material-containing layer may contain a negative electrode active material. The negative electrode active material-containing layer may contain a binder, an electro-conductive agent, or both the binder and electro-conductive agent, in addition to the negative electrode active material.

As the negative electrode active material, for example, a metal, metal alloy, metal oxide, metal sulfide, metal nitride, graphitic material, carbonaceous material, and the like may be used. As the metal oxide, for example, a compound containing titanium, such as monoclinic titanium dioxide (for example, TiO₂(B)) and a lithium titanium composite oxide may be used. Examples of the metal sulfide include, titanium sulfide such as TiS₂, molybdenum sulfide such as MoS₂, and iron sulfide such as FeS, FeS₂, and LiₓFeS₂ (subscript x is 0.9 ≤ x ≤ 1.2). Examples of the graphitic material and carbon material include natural graphite, artificial graphite, coke, vapor-grown carbon fiber, mesophase pitch-based carbon fiber, spherical carbon, and resin-fired carbon. Note, that it is also possible to use plural of different negative electrode active materials in mixture.

A specific example of the compound containing titanium may be spinel lithium titanate, for example, a compound expressed by Li_{4+w}Ti₅O₁₂, where 0 ≤ w ≤ 3. Spinel lithium titanate has electro-conductivity in a state in which lithium is inserted (w > 0), and the electro-conductivity increases as the amount of inserted lithium increases.

More specific examples of the lithium titanium composite oxide include lithium titanium composite oxides like monoclinic niobium titanium composite oxide and orthorhombic titanium-containing composite oxide.

An example of the monoclinic niobium titanium composite oxide include a compound represented by LiₓTi_{1-y}M1_{y}Nb_{2-z}M2_{z}O_{7+δ}. Here, M1 is at least one selected from the group consisting of Zr, Si, and Sn. M2 is at least one selected from the group consisting of V, Ta, and Bi. The respective subscripts in the composition formula are 0 ≤ x ≤ 5, 0 ≤ y < 1, 0 ≤ z < 2, and -0.3 ≤ δ ≤ 0.3. A specific example of monoclinic niobium titanium composite oxide is LiₓNb₂TiO₇ (0 ≤ x ≤ 5).

Another example of monoclinic niobium titanium composite oxide is a compound represented by LiₓTi_{1-y}M3_{y+z}Nb_{2-z}O_{7-δ}. Here, M3 is at least one selected from Mg, Fe, Ni, Co, W, Ta, and Mo. The respective subscripts in the composition formula are 0 ≤ x ≤ 5, 0 ≤ y < 1, 0 ≤ z < 2, and -0.3 ≤ δ ≤ 0.3.

Examples of orthorhombic titanium-containing composite oxide include a compound represented by Li₂₊ₐM(I)_{2-b}Ti_{6-c}M(II)_{d}O_{14+σ}. Here, M(I) is at least one selected from the group consisting of Sr, Ba, Ca, Mg, Na, Cs, Rb and K. M(II) is at least one selected from the group consisting of Zr, Sn, V, Nb, Ta, Mo, W, Y, Fe, Co, Cr, Mn, Ni and Al. The respective subscripts in the composition formula are, 0 ≤ a ≤ 6, 0 ≤ b < 2, 0 ≤ c < 6, 0 ≤ d < 6, and -0.5 ≤ σ ≤ 0.5. A specific example of the orthorhombic titanium-containing composite oxide is Li₂₊ₐNa₂Ti₆O₁₄ (0 ≤ a ≤ 6) .

As the negative electrode active material, an oxide of titanium having little expansion and contraction of crystal structure upon charge and discharge is preferably used. The negative electrode active material more preferably includes lithium titanate expressed by Li₄Ti₅O₁₂ characterized by a distortion-less property, where the crystal structure neither expands nor contracts upon charge and discharge. When an active material that expands or contracts a little upon charge and discharge is used as the negative electrode active material, it is possible to suppress cracking of the active material particles of the positive electrode due to expansion and contraction of the electrode group upon charge and discharge.

As the binder for the negative electrode active material-containing layer, for example, polytetrafluoroethylene (PTFE), polyvinylidene fluoride (PVdF), fluorine rubber, styrene butadiene rubber (SBR), and the like may be used.

As the electro-conductive agent for the negative electrode active material-containing layer, for example, carbon materials such as acetylene black, carbon black, graphite, carbon fiber, graphene, and the like may be used.

A proportion of the negative electrode active material, negative electrode electro-conductive agent, and negative electrode binder in the negative electrode active material-containing layer is preferably 70% by weight or more and 95% by weight or less, 0% by weight or more and 25% by weight or less, and 2% by weight or more and 10% by weight or less, respectively.

The negative electrode described above can be produced, for example, as follows.

A negative electrode current collector is prepared. As the negative electrode current collector, for example, a strip-shaped foil made of the materials explained above may be used.

The constituent materials of the negative electrode active material-containing layer, namely, a negative electrode active material, an electro-conductive agent, and a binder are prepared. The constituent materials of the negative electrode active material-containing layer are dispersed in an organic solvent, so as to prepare a coating fluid. As the organic solvent, a generally used solvent, such as N-methylpyrrolidone (NMP), may be used.

The prepared coating fluid is applied onto the prepared negative electrode current collector. The applied coating fluid is dried to form a negative electrode active material-containing layer. The negative electrode active material-containing layer may be formed on one surface of the negative electrode current collector, or on both of reverse surfaces of the negative electrode current collector. A portion of the negative electrode current collector may be left uncoated with the coating fluid, so that an uncoated portion serving as a negative electrode tab can be obtained.

The strip-formed body after drying is press-molded and cut to predetermined dimensions, so that a negative electrode can be obtained. Optionally, a current collecting tab independent of the negative electrode current collector may be electrically connected to the negative electrode.

### (Separator)

The separator is not particularly limited as long as it exhibits insulating property. As the separator, for example, porous films or nonwoven fabrics formed of polymers such as polyolefins, cellulose, polyethylene terephthalate, and vinylon may be used. The material for the separator may be one species, or two or more species may be used in combination.

### (Electrolyte)

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluoro phosphate (LiPF₆), lithium tetrafluoro borate (LiBF₄), lithium hexafluoro arsenate (LiAsF₆), lithium trifluoromethane sulfonate (LiCF₃SO₃), lithium bis trifluoromethyl sulfonyl imide [LiN(CF₃SO₂)₂], and mixtures thereof. The electrolyte salt is preferably one that hardly oxidizes even at high potential, and LiPF₆ is most preferable.

As the organic solvent, for example, propylene carbonate (PC), ethylene carbonate (EC), 1,2-dimethoxy ethane (DME), γ-butyrolactone (GBL), tetrahydrofuran (THF), 2-methyl tetrahydrofuran (2-MeTHF), 1,3-dioxolane, sulfolane (SL), acetonitrile (AN), diethyl carbonate (DEC), dimethyl carbonate (DMC), and methyl ethyl carbonate (MEC), and the like may be used. These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, a room temperature molten salt (ionic melt) including lithium ions, a polymer solid electrolyte, an inorganic solid electrolyte, or the like may be used as the nonaqueous electrolyte.

The room temperature molten salt (ionic melt) indicates compounds among organic salts made of combinations of organic cations and anions, which are able to exist in a liquid state at room temperature (15°C to 25 °C) . The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

### (Exterior Parts)

As the exterior parts, for example, bag-form container made of a laminate film or a metal container may be used.

The shape thereof is not limited in particular, but examples include a flat form, a prismatic form, a cylinder form, a coin form, a button form, a sheet form, a stacked form, and the like. Note, that as a matter of course, other than exterior parts for a small-sized battery for installing on mobile electronic devices and the like, exterior parts for a large-sized battery for installation onto two-wheeled or four-wheeled automobiles or the like are also viable.

As the laminate film, for example, there may be used a multilayer film where a metal layer is sandwiched between resin layers . Alternatively, there may also be used a multilayer film including a metal layer and resin layer (s) covering the metal layer.

As the metal layer, preferable is aluminum foil or aluminum alloy foil, in view of lightening weight. For the resin layer(s), for example, a polymeric material such as polypropylene (PP), polyethylene (PE), nylon, or polyethylene terephthalate (PET) may be used. The laminate film may be formed into the shape of a container member, by heat-sealing. A film thickness of the laminate film is preferably 0.2 mm or less.

The metal case may be made of, for example, aluminum or aluminum alloy. The aluminum alloy preferably contains elements such as magnesium, zinc, or silicon. Meanwhile, if the aluminum alloy contains a transition metal such as iron, copper, nickel, or chromium, the content thereof is preferably 100 ppm or less. Thereby, long-term reliability under a high temperature environment and thermal radiation is capable of being dramatically improved. The wall thickness of the metal container is preferably 0.5 mm or less, and the wall thickness is more preferably 0.2 mm or less.

### (Positive Electrode Terminal)

The positive electrode terminal may be made of, for example, a material that is electrically stable in the potential range of 3.0 V to 4.5 V relative to the redox potential of lithium, and has electrical conductivity. The positive electrode terminal is preferably made of aluminum or aluminum alloy containing element(s) such as Mg, Ti, Zn, Mn, Fe, Cu, and Si. The positive electrode terminal is preferably made of the same material as the positive electrode current collector, in order to reduce contact resistance with the positive electrode current collector.

### (Negative Electrode Terminal)

The negative electrode terminal may be made of, for example, a material that is electrically stable in the potential range of 0.8 V to 3.0 V relative to the redox potential of lithium, and has electrical conductivity. The negative electrode terminal is preferably made of aluminum or aluminum alloy containing element(s) such as Mg, Ti, Zn, Mn, Fe, Cu, and Si. The negative electrode terminal is preferably made of the same material as the negative electrode current collector, in order to reduce contact resistance with the negative electrode current collector.

Next, few examples of the battery according to the second embodiment will be specifically described with reference to the drawings.

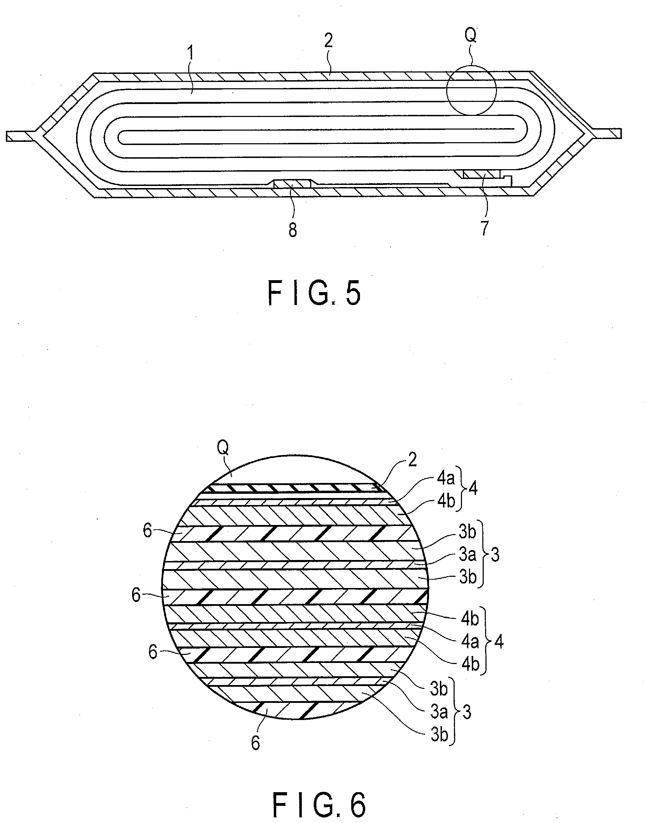

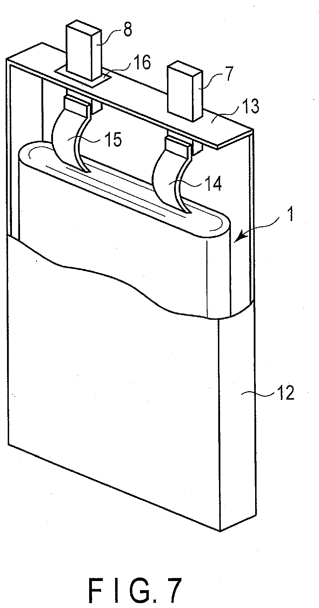

An example of a battery according to the embodiment will be described with reference to FIG. 5 and FIG. 6. FIG. 5 is a cross-sectional view of an example of a battery according to the embodiment, cut in a thickness direction. FIG. 6 is an enlarged cross-sectional view of section Q of FIG. 7.

As shown in FIG. 5, a flat battery is provided with a flat shaped wound electrode group 1, an exterior part 2, a positive electrode terminal 7, a negative electrode terminal 6, and an electrolyte (depiction omitted). The exterior part 2 is a bag-form exterior part made of a laminate film. The wound electrode group 1 is housed in the exterior part 2. As shown in FIG. 6, the wound electrode group 1 includes a positive electrode 3, a negative electrode 4, and a separator 6. The wound electrode group 1 has a structure where a stack having these components stacked is spirally wound in such a manner that the negative electrode 4, the separator 6, the positive electrode 3, and the separator 6 are arranged in this order from the outside then formed into a flat shape, for example by press molding.

The positive electrode 3 includes a positive electrode current collector 3a and a positive electrode active material-containing layer 3b. The positive electrode active material-containing layer 3b contains the positive electrode active material. The positive electrode active material-containing layer 3b is formed on each surface of the positive electrode current collector 3a. The negative electrode 4 includes a negative electrode current collector 4a and a negative electrode active material-containing layer 4b. The negative electrode active material-containing layer 4b contains a negative electrode active material. In a portion of the negative electrode 4 positioned in the outermost periphery of the wound electrode group 1, the negative electrode active material-containing layer 4b is formed only on one surface on the inner surface side of the negative electrode current collector 4a.In other portions of the negative electrode 4, the negative electrode active material-containing layer 4b is formed on each surface of the negative electrode current collector 4a.

Further, as shown in FIG. 5, the belt-shaped positive electrode terminal 7 is connected to the positive electrode current collector 3a of the positive electrode 3 in the vicinity of the outer peripheral end of the wound electrode group 1. Further, the belt-shaped negative electrode terminal 8 is connected to the negative electrode current collector 4a of the portion of the negative electrode 4 positioned at the outermost periphery. The positive electrode terminal 7 and the negative electrode terminal 8 are extended to the outside through an opening of the exterior part 2. A nonaqueous electrolyte, which is not shown, is further housed within the exterior part 2.

The battery according to the embodiment is not limited to the structure shown in FIG. 5 and FIG. 6 described above, but may be of a structure shown in FIG. 7, for example.

In a prismatic battery shown in FIG. 7, a wound electrode group 1 is housed in a metallic bottomed rectangular tubular container (exterior part) 12. An undepicted electrolyte is housed in the container 12. A rectangular lid 13 is welded onto the opening of the container 12, whereby the wound electrode group 1 and the electrolyte are sealed within the exterior parts. The flat-shaped wound electrode group 1 may have the same structure as that of the battery shown in FIG. 5.

One end of a positive electrode tab 14 is electrically connected to the positive electrode current collector and the other end is electrically connected to a positive electrode terminal 7 fixed to the rectangular lid 13. One end of a negative electrode tab 15 is electrically connected to the negative electrode current collector and the other end thereof is electrically connected to a negative electrode terminal 8. The negative electrode terminal 8 is fixed to the rectangular lid 13 by a hermetic seal with a glass material 16 interposed.

The positive electrode tab 14 is made of a material such as aluminum or an aluminum alloy containing elements such as Mg, Ti, Zn, Mn, Fe, Cu, Si, and the like. The positive electrode tab 14 is preferably formed of a similar material to that of the positive electrode current collector so as to reduce the contact resistance with the positive electrode current collector.

The negative electrode tab 15 is made of a material such as aluminum or an aluminum alloy containing elements such as Mg, Ti, Zn, Mn, Fe, Cu, Si, and the like. The negative electrode tab 15 is preferably formed of a similar material to that of the negative electrode current collector so as to reduce the contact resistance with the negative electrode current collector.

In the depicted battery, the wound type electrode group in which the separator is wound together with the positive electrode and the negative electrode has been used, but there may be used, for example, a stacked electrode group in which a separator is folded in zigzag and positive electrode (s) and negative electrode(s) are alternately arranged at the folded portions.

According to the second embodiment described above, the battery includes a positive electrode and a negative electrode, and the positive electrode includes the electrode according to the first embodiment. By virtue of such a configuration, the battery according to the second embodiment is excellent in all of the input-output performance, energy density, and life performance.

### [Third Embodiment]

According to a third embodiment, a battery pack is provided. This battery pack includes the battery according to the second embodiment.

The battery pack according to the third embodiment may include plural batteries. The plural batteries may be electrically connected in series or electrically connected in parallel. Alternatively, plural batteries may be electrically connected in a combination of series and parallel.

The battery pack according to the third embodiment may also include a battery module. The battery pack according to the second embodiment may include a single battery module, or alternatively plural battery modules. The plural battery modules may be electrically connected in series, in parallel, or in combination of series and parallel.

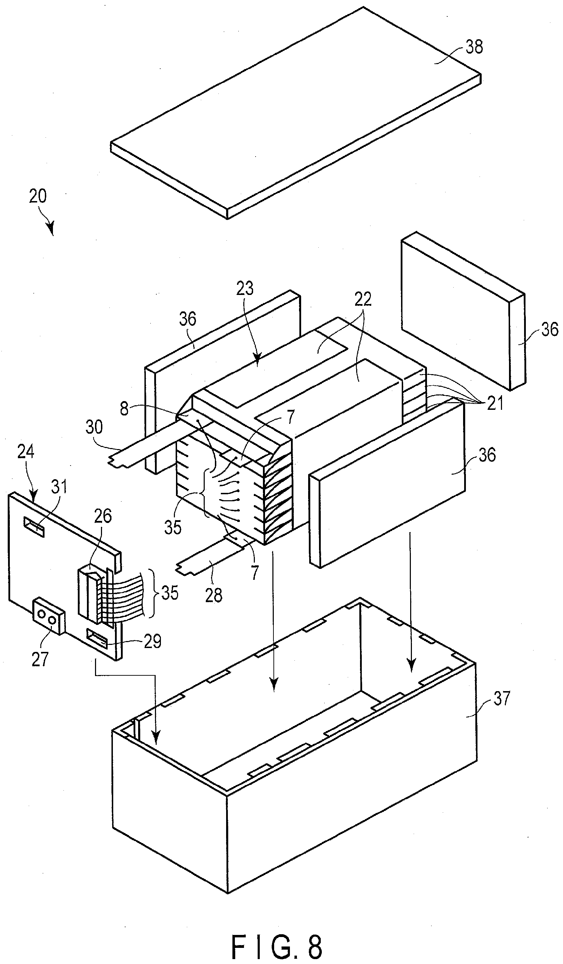

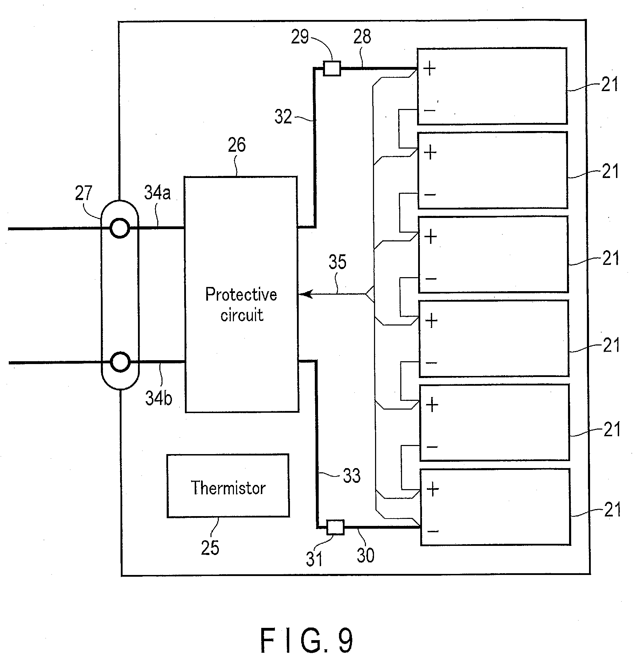

Hereinafter, an example of a battery pack according to the third embodiment will be described with reference to FIGS. 8 and 9.

FIG. 8 is an exploded perspective view of an example of the battery pack according to the third embodiment. FIG. 9 is a block diagram showing an electric circuit of the battery pack shown in FIG. 8.

The battery pack 20 shown in FIG. 8 and FIG. 9 includes plural single-batteries 21. The single-battery 21 may be the exemplar prismatic battery according to the second embodiment described with reference to FIG. 7.

The plural single-batteries 21 are stacked so that negative electrode terminals 8 and positive electrode terminals 7 extending to the outside are aligned in the same direction and are fastened with an adhesive tape 22 to configure a battery module 23. These single-batteries 21 are electrically connected in series to each other as shown in FIG. 9.

A printed wiring board 24 is disposed to face the side surface from which the negative electrode terminals 8 and the positive electrode terminals 7 of the single-batteries 21 extend. As shown in FIG. 9, the printed wiring board 24 is installed with a thermistor 25, a protective circuit 26, and an energizing terminal 27 to external equipment. Note that an insulating plate (not shown) is attached to the surface of the printed wiring board 24 facing the battery module 23 so as to avoid unnecessary connection with the wiring of the battery module 23.

A positive electrode side lead 28 is connected to the positive electrode terminal 7 located lowermost in the battery module 23, and its tip is inserted into a positive electrode side connector 29 of the printed wiring board 24 and electrically connected thereto. A negative electrode side lead 30 is connected to the negative electrode terminal 8 located uppermost in the battery module 23, and its tip is inserted into the negative electrode side connector 31 of the printed wiring board 24 and electrically connected thereto. These connectors 29 and 31 are connected to the protective circuit 26 through wiring 32 and wiring 33 formed on the printed wiring board 24.

The thermistor 25 detects the temperature of the single-batteries 21, and the detection signal is transmitted to the protective circuit 26. The protective circuit 26 can shut off a plus-side wiring 34a and a minus-side wiring 34b between the protective circuit 26 and the energizing terminal 27 to external equipment in a predetermined condition. An example of the predetermined condition is, for example, when the temperature detected by the thermistor 25 becomes a predetermined temperature or higher. Further, another example of the predetermined condition is, for example, when overcharge, over-discharge, overcurrent, or the like of the single-battery 21 is detected. Detection of this overcharge or the like is performed for each of the individual single-batteries 21 or the entire battery module 23. In the case of detecting each single-battery 21, a battery voltage may be detected, or a positive electrode potential or a negative electrode potential may be detected. In the latter case, a lithium electrode used as a reference electrode is inserted into each single-battery 21. In the case of the battery pack 20 of FIG. 8 and FIG. 9, wiring 35 for voltage detection is connected to each of the single-batteries 21. Detection signals are transmitted to the protective circuit 26 through the wiring 35.

Protective sheets 36 made of rubber or resin are respectively arranged on three side surfaces of the battery module 23 excluding the side surface from which the positive electrode terminal 7 and the negative electrode terminal 8 protrude.

The battery module 23 is housed in a housing container 37 together with each protective sheet 36 and the printed wiring board 24. That is, the protective sheets 36 are disposed in the housing container 37 respectively on both inner side surfaces along a long-side direction and an inner side surface along a short-side direction, and the printed wiring board 24 is disposed on the other inner side surface along the short-side direction on the opposite side across the battery module 23. The battery module 23 is located in a space surrounded by the protective sheets 36 and the printed wiring board 24. A lid 38 is attached to the upper surface of the housing container 37.

For fixing the battery module 23, a thermal shrinkage tape may be used in place of an adhesive tape 22. In this case, after the protective sheets are disposed on each side surface of the battery module and a thermal shrinkage tape is wound, the thermal shrinkage tape is thermally shrunk, to bind the battery module.

In FIG. 8 and FIG. 9, the single-batteries 21 are connected in series, but the single-batteries 21 may be electrically connected in parallel in order to increase the battery capacity. Further, the assembled battery packs may also be electrically connected in parallel or in a combination of in series and parallel.

In addition, the mode of the battery pack according to the third embodiment is appropriately changed depending on the application. A preferable application of the battery pack according to the third embodiment is one where excellent cycle performance is desired to be exhibited under use conditions where large current performance is demonstrated. Specific examples of the applications include that for a power source of a digital camera, and for use in a vehicle such as a two-wheeled to four-wheeled hybrid electric car, a two-wheeled to four-wheeled electric automobile, and a power-assisted bicycle . In particular, the battery pack according to the third embodiment is favorable for onboard use.

The battery pack according to the third embodiment includes the battery according to the second embodiment. Therefore, the battery pack according to the third embodiment is excellent in all of the input-output performance, energy density, and life performance.

### [Examples]

### <Production of Nonaqueous Electrolyte Battery>

### (Example 1)

### (Production of Positive Electrode)

As an active material, lithium-containing nickel cobalt manganese composite oxide LiNi_{0.6}Co_{0.2}Mn_{0.2}O₂ formed of secondary particles was prepared. The average secondary particle size of the prepared active material was 12 µm, while the average primary particle size was 0.5 µm. Acetylene black as an electro-conductive agent, and polyvinylidene fluoride as a binder were prepared. The active material, electro-conductive agent, and binder were dissolved and mixed in N-methylpyrrolidone (NMP) at a weight ratio of 90:5:5, to prepare a paste.

The prepared paste was subjected to beads mill dispersion to uniformly disperse the active material, electro-conductive agent, the binder, whereby a paste-form dispersion liquid was obtained. Then, the dispersion liquid treated by the beads milling was subjected to an ultrasonic treatment for one hour under the condition of 30 W output. The paste-form dispersion liquid after the ultrasonic treatment was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

### (Production of Negative Electrode)

MCF (mesophase pitch-based carbon fiber) as negative electrode active material, graphite as electro-conductive agent, SBR (styrene-butadiene rubber) as binder, and CMC (carboxymethyl cellulose) as thickener were prepared. The negative electrode active material, electro-conductive agent, binder, and thickener were dissolved in water and mixed at a weight ratio of 85:10:3:2 to prepare a paste. This paste was uniformly applied onto both of reverse surfaces of a negative electrode current collector formed of a strip-shaped copper foil, as a negative electrode coating fluid. The negative electrode coating fluid was dried to form a negative electrode active material-containing layer. A strip-formed body obtained after drying was press-molded, and thereafter the strip-formed body was cut to predetermined dimensions. A current collecting tab was welded thereto to obtain a negative electrode.

### (Production of Electrode Group)

Two sheets of polyethylene resin separators were provided. Next, a stack was formed by stacking one of the separators, the positive electrode, the other separator, and the negative electrode in this order. Subsequently, the stack thus obtained was spirally wound so that the negative electrode was located at the outermost periphery. Then, the winding core was removed, and then the wound body was pressed while being heated. A wound electrode group was thus produced.

### (Preparation of Nonaqueous Electrolyte)

As a nonaqueous solvent, a mixed solvent in which ethylene carbonate and propylene carbonate were mixed at a volume ratio of 1:2 was prepared. LiPF₆ as an electrolyte salt was dissolved in this mixed solvent at 1.0 mol/L to prepare a nonaqueous electrolyte.

### (Assembly of Battery)

Electrode terminals were respectively equipped onto the positive electrode and the negative electrode of the wound electrode group obtained as described above. The electrode group was housed in a prismatic container made of aluminum. The aforementioned nonaqueous electrolyte was put into the container, and a nonaqueous electrolyte battery was obtained by sealing the container. For the design of the battery, used was a design with which the nominal capacity was 15 Ah.

### (Example 2)

### (Production of Positive Electrode)

As active material, the same lithium-containing nickel cobalt manganese composite oxide LiNi_{0.6}Co_{0.2}Mn_{0.2}O₂ as that of Example 1 was prepared. Acetylene black as electro-conductive agent, and polyvinylidene fluoride as binder were prepared. The active material, electro-conductive agent, and binder were dissolved and mixed in NMP at a weight ratio of 90:5:5, to prepare a paste.

The prepared paste was subjected to jet mill dispersion to uniformly disperse the active material, electro-conductive agent, and binder, whereby a paste-form dispersion liquid was obtained. Then, the dispersion liquid treated by the jet milling was subjected to an ultrasonic treatment for one hour under the condition of 30 W output. The paste-form dispersion liquid after the ultrasonic treatment was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-like body obtained after drying was press-molded, and thereafter the strip-like body was cut to predetermined dimensions. A current collecting tab was welded thereto to obtain a positive electrode.

A battery was produced by the same method as in Example 1 except for the production of the positive electrode.

### (Example 3)

### (Production of Positive Electrode)

As active material, the same lithium-containing nickel cobalt manganese composite oxide LiNi_{0.6}Co_{0.2}Mn_{0.2}O₂ as that of Example 1 was prepared. Acetylene black as electro-conductive agent was prepared. The active material and electro-conductive agent were respectively weighed out at a weight ratio of 90:5. The weighed out two species of powder were put together in a dry beads mill apparatus, and mixed until uniform.

Polyvinylidene fluoride as binder was prepared. The mixed powder obtained by treatment with the beads mill and the binder were dissolved in NMP and mixed, in such a manner that a weight ratio of the active material, electro-conductive agent, and binder was 90:5:5, to prepare a paste.

The paste was subjected to an ultrasonic treatment for one hour under the condition of 30 W output. The paste-form dispersion liquid obtained by the ultrasonic treatment was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Example 4)

As active material, the same lithium-containing nickel cobalt manganese composite oxide LiNi_{0.6}Co_{0.2}Mn_{0.2}O₂ as that of Example 1 was prepared. Acetylene black as electro-conductive agent, and polyvinylidene fluoride as binder were prepared. The active material, electro-conductive agent, and binder were dissolved and mixed in NMP at a weight ratio of 90:5:5, to prepare a paste.

The prepared paste was subjected to beads mill dispersion to uniformly disperse the active material, electro-conductive agent, and binder, whereby a paste-form dispersion liquid was obtained. The paste-form dispersion liquid was uniformly applied as a positive electrode coating liquid onto both of reverse surfaces of a current collector made of a strip-shaped aluminum foil. The applied coat of the positive electrode coating liquid was dried to form a positive electrode active material-containing layer. A strip-formed body obtained after drying was press-molded, and thereafter wound to form an electrode reel. The obtained electrode reel was put into a pressurizing apparatus, and pressurized at a pressure of 1 Mpa. After the pressurizing, the electrode was cut to predetermined dimensions. A current collecting tab was welded thereto to obtain a positive electrode.

A battery was produced by the same method as in Example 1 except for the production of the positive electrode.

### (Example 5)

### (Production of Positive Electrode)

As active material, the same lithium-containing nickel cobalt manganese composite oxide LiNi_{0.6}Co_{0.2}Mn_{0.2}O₂ as that of Example 1 was prepared. Acetylene black as electro-conductive agent, and polyvinylidene fluoride as binder were prepared. The active material, electro-conductive agent, and binder were dissolved and mixed in NMP at a weight ratio of 90:5:5, to prepare a paste.

The prepared paste was subjected to beads mill dispersion to uniformly disperse the active material, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

### (Production of Negative Electrode)

A negative electrode was produced by the same method as in Example 1.

### (Production of Electrode Group)

Two sheets of polyethylene resin separators were provided. Next, a stack was formed by stacking one of the separators, the positive electrode, the other separator, and the negative electrode in this order. Subsequently, the stack thus obtained was spirally wound so that the negative electrode was located at the outermost periphery. Then, after the winding core was removed, the wound body (electrode coil) was put into a pressurizing apparatus and pressurized at a pressure of 1 Mpa. After being taken out of the pressurizing apparatus, the wound body was pressed while being heated. A wound electrode group was thus produced.

Except that the electrode group was produced in the above manner, a battery was produced by the same method as in Example 1.

### (Example 6)

### (Production of Positive Electrode)

As active material, the same lithium-containing nickel cobalt manganese composite oxide LiNi_{0.6}Co_{0.2}Mn_{0.2}O₂ as that of Example 1 was prepared. Acetylene black as electro-conductive agent, and polyvinylidene fluoride as binder were prepared. The active material, electro-conductive agent, and binder were dissolved and mixed in NMP at a weight ratio of 90:5:5, to prepare a paste.

The prepared paste was subjected to beads mill dispersion to uniformly disperse the active material, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

### (Production of Negative Electrode)

A negative electrode was produced by the same method as in Example 1.

### (Production of Electrode Group)

An electrode group was produced by the same method as in Example 1, except for the production of the positive electrode.

### (Preparation of Nonaqueous Electrolyte)

A nonaqueous electrolyte was prepared by the same method as in Example 1.

### (Assembly of Battery)

Electrode terminals were respectively attached onto the positive electrode and the negative electrode of the wound electrode group obtained as described above. The electrode group was housed in a prismatic container made of aluminum and having a wall thickness of 0.15 mm. Then, the prismatic battery in a state before having a nonaqueous electrolyte put in (the prismatic container housing the electrode group) was put in a pressurizing apparatus, and the prismatic battery was pressurized at a pressure of 1 Mpa. The prismatic battery was taken out of the pressurizing apparatus, and the nonaqueous electrolyte was put into the prismatic container and the container was sealed. As a result, a nonaqueous electrolyte battery was obtained.

### (Example 7)

### (Production of Positive Electrode)

As active material, the same lithium-containing nickel cobalt manganese composite oxide LiNi_{0.6}Co_{0.2}Mn_{0.2}O₂ as that of Example 1 was prepared. Acetylene black as electro-conductive agent, and polyvinylidene fluoride as binder were prepared. The active material, electro-conductive agent, and binder were dissolved and mixed in NMP at a weight ratio of 90:5:5, to prepare a paste.

The prepared paste was subjected to beads mill dispersion to uniformly disperse the active material, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

### (Production of Negative Electrode)

A negative electrode was produced by the same method as in Example 1.

### (Production of Electrode Group)

An electrode group was produced by the same method as in Example 1, except for the production of the positive electrode.

### (Preparation of Nonaqueous Electrolyte)

A nonaqueous electrolyte was prepared by the same method as in Example 1.

### (Assembly of Battery)

A nonaqueous electrolyte battery was produced by the same method as in Example 1 except for the production of the electrode group.

### (Break-in Charge-Discharge)

The obtained nonaqueous electrolyte battery was subjected to a constant current charge to 3.8 V at a current value of 0.2 C under a temperature condition of 25°C. Thereafter, the battery was subjected to a constant current discharge to 3.0 V at a current value of 1 C. The charge and discharge was repeated, and the charge and discharge was performed ten times in total. In this manner, the break-in charge-discharge in a range of SOC from 0% to 50% was performed.

### (Example 8)

As the active material of the positive electrode, lithium-containing nickel cobalt manganese composite oxide LiNi_{0.5}CO_{0.2}Mn_{0.3}O₂ formed of secondary particles was prepared. The average secondary particle size of the prepared active material was 12 µm, while the average primary particle size was 0.5 µm. Except that the positive electrode active material was changed, a nonaqueous electrolyte battery was produced by the same method as in Example 1.

### (Example 9)

As the active material of the positive electrode, lithium-containing nickel cobalt manganese composite oxide LiNi_{1/3}Co_{1/3}Mn_{1/3}O₂ formed of secondary particles was prepared. The average secondary particle size of the prepared active material was 12 µm, while the average primary particle size was 0.5 µm. Except that the positive electrode active material was changed, a nonaqueous electrolyte battery was produced by the same method as in Example 1.

### (Example 10)

As the active material of the positive electrode, lithium-containing nickel cobalt manganese composite oxide LiNi_{0.7}Co_{0.15}Mn_{0.15}O₂ formed of secondary particles was prepared. The average secondary particle size of the prepared active material was 12 µm, while the average primary particle size was 0.5 µm. Except that the positive electrode active material was changed, a nonaqueous electrolyte battery was produced by the same method as in Example 1.

### (Example 11)

As the active material of the positive electrode, lithium-containing nickel cobalt manganese composite oxide LiNi_{0.8}Co_{0.1}Mn_{0.1}O₂ formed of secondary particles was prepared. The average secondary particle size of the prepared active material was 12 µm, while the average primary particle size was 0.5 µm. Except that the positive electrode active material was changed, a nonaqueous electrolyte battery was produced by the same method as in Example 1.

### (Example 12)

As a first active material, lithium-containing nickel cobalt manganese composite oxide LiNi_{0.6}Co_{0.2}Mn_{0.2}O₂ formed of secondary particles was prepared. As a second active material, lithium-containing spinel manganese oxide LiMn₂O₄ formed of primary particles was prepared. The average secondary particle size of the prepared first active material was 12 µm, while the average primary particle size was 0.5 µm. The average primary particle size of the prepared second active material was 4 µm. Acetylene black as electro-conductive agent, and polyvinylidene fluoride as binder were prepared. The first active material, second active material, electro-conductive agent, and binder were dissolved and mixed in NMP at a weight ratio of 80:10:5:5, to prepare a paste.

The prepared paste was subjected to beads mill dispersion to uniformly disperse the first active material, second active material, electro-conductive agent, and binder, whereby a paste-form dispersion liquid was obtained. Subsequently, the dispersion liquid treated by beads milling was subjected to an ultrasonic treatment for one hour under the condition of 30 W output. The paste-form dispersion liquid obtained after the ultrasonic treatment was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Example 13)

As a first active material, lithium-containing nickel cobalt manganese composite oxide LiNi_{0.6}Co_{0.2}Mn_{0.2}O₂ formed of secondary particles was prepared. As a second active material, lithium-containing olivine iron oxide LiFePO₄ formed of primary particles was prepared. The average secondary particle size of the prepared first active material was 12 µm, while the average primary particle size was 0.5 µm. The average primary particle size of the prepared second active material was 3 µm. Acetylene black as electro-conductive agent, and polyvinylidene fluoride as binder were prepared. The first active material, second active material, electro-conductive agent, and binder were dissolved and mixed in NMP at a weight ratio of 80:10:5:5, to prepare a paste.

The prepared paste was subjected to beads mill dispersion to uniformly disperse the first active material, second active material, electro-conductive agent, and binder, whereby a paste-form dispersion liquid was obtained. Subsequently, the dispersion liquid treated by beads milling was subjected to an ultrasonic treatment for one hour under the condition of 30 W output. The paste-form dispersion liquid obtained after the ultrasonic treatment was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Example 14)

As a first active material, lithium-containing nickel cobalt manganese composite oxide LiNi_{0.6}Co_{0.2}Mn_{0.2}O₂ formed of secondary particles was prepared. As a second active material, lithium-containing cobalt oxide LiCoO₂ formed of primary particles was prepared. The average secondary particle size of the prepared first active material was 12 µm, while the average primary particle size was 0.5 µm. The average primary particle size of the prepared second active material was 6 µm. Acetylene black as electro-conductive agent, and polyvinylidene fluoride as binder were prepared. The first active material, second active material, electro-conductive agent, and binder were dissolved and mixed in NMP at a weight ratio of 80:10:5:5, to prepare a paste.

The prepared paste was subjected to beads mill dispersion to uniformly disperse the first active material, second active material, electro-conductive agent, and binder, whereby a paste-form dispersion liquid was obtained. Subsequently, the dispersion liquid treated by beads milling was subjected to an ultrasonic treatment for one hour under the condition of 30 W output. The paste-form dispersion liquid obtained after the ultrasonic treatment was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Example 15)

An oxide of titanium TiO₂ (B) as negative electrode active material, graphite as electro-conductive agent, and polyvinylidene fluoride (PVdF) as binder were prepared. The negative electrode active material, electro-conductive agent, and binder were mixed at a weight ratio of 90:5:5. The thus obtained mixture was dissolved and mixed into NMP as solvent. Thereby a paste-form negative electrode coating fluid was prepared. This paste-form negative electrode coating fluid was uniformly applied onto both of reverse surfaces of a negative electrode current collector formed of a strip-shaped aluminum foil. The negative electrode coating fluid was dried to form a negative electrode active material-containing layer. A strip-formed body obtained after drying was press-molded, and thereafter the strip-formed body was cut to predetermined dimensions. A current collecting tab was welded thereto to obtain a negative electrode.

A battery was produced by the same method as in Example 1 except for the production of the negative electrode.

### (Example 16)

A titanium niobium oxide TiNb₂O₇ as negative electrode active material, graphite as electro-conductive agent, and polyvinylidene fluoride (PVdF) as binder were prepared. The negative electrode active material, electro-conductive agent, and binder were mixed at a weight ratio of 90:5:5. The thus obtained mixture was dissolved and mixed into NMP as solvent. Thereby a paste-form negative electrode coating fluid was prepared. This paste-form negative electrode coating fluid was uniformly applied onto both of reverse surfaces of a negative electrode current collector formed of a strip-shaped aluminum foil. The negative electrode coating fluid was dried to form a negative electrode active material-containing layer. A strip-formed body obtained after drying was press-molded, and thereafter the strip-formed body was cut to predetermined dimensions. A current collecting tab was welded thereto to obtain a negative electrode.

A battery was produced by the same method as in Example 1 except for the production of the negative electrode.

### (Example 17)

A lithium titanate Li₄Ti₅O₁₂ as negative electrode active material, graphite as electro-conductive agent, and polyvinylidene fluoride (PVdF) as binder were prepared. The negative electrode active material, electro-conductive agent, and binder were mixed at a weight ratio of 90:5:5. The thus obtained mixture was dissolved and mixed into NMP as solvent. Thereby a paste-form negative electrode coating fluid was prepared. This paste-form negative electrode coating fluid was uniformly applied onto both of reverse surfaces of a negative electrode current collector formed of a strip-shaped aluminum foil. The negative electrode coating fluid was dried to form a negative electrode active material-containing layer. A strip-formed body obtained after drying was press-molded, and thereafter the strip-formed body was cut to predetermined dimensions. A current collecting tab was welded thereto to obtain a negative electrode.

A battery was produced by the same method as in Example 1 except for the production of the negative electrode.

### (Comparative Example 1)

As active material, lithium-containing nickel cobalt manganese composite oxide LiNi_{0.6}Co_{0.2}Mn_{0.2}O₂ formed of secondary particles was prepared. The average secondary particle size of the prepared active material was 12 µm, while the average primary particle size was 0.5 µm. Acetylene black as electro-conductive agent, and polyvinylidene fluoride as binder were prepared. The active material, electro-conductive agent, and binder were dissolved and mixed in NMP at a weight ratio of 90:5:5, to prepare a paste.

The prepared paste was mixed with a planetary mixer to uniformly disperse the active material, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Comparative Example 2)

As active material, lithium-containing nickel cobalt manganese composite oxide LiNi_{0.6}CO_{0.2}Mn_{0.2}O₂ formed of secondary particles was prepared. The average secondary particle size of the prepared active material was 12 µm, while the average primary particle size was 0.5 µm. Acetylene black as electro-conductive agent, and polyvinylidene fluoride as binder were prepared. The active material, electro-conductive agent, and binder were dissolved and mixed in NMP at a weight ratio of 90:5:5, to prepare a paste.

The prepared paste was subjected to beads milling to uniformly disperse the active material, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Comparative Example 3)

As a positive electrode active material, lithium-containing nickel cobalt manganese composite oxide LiNi_{0.6}Co_{0.2}Mn_{0.2}O₂ formed of secondary particles was prepared. The average secondary particle size of the prepared positive electrode active material of secondary particle form was 12 µm, while the average primary particle size was 0.5 µm. As another positive electrode active material, LiNi0.6Co0.2Mn0.2O2 formed only of primary particles was prepared. The primary particle size of the prepared positive electrode active material of primary particle form was 0.5 µm. Acetylene black as electro-conductive agent, and polyvinylidene fluoride as binder were prepared. The positive electrode active material of secondary particle form, positive electrode active material of primary particle form, electro-conductive agent, and binder were dissolved and mixed in NMP at a weight ratio of 70:20:5:5, to prepare a paste.

The prepared paste was mixed with a planetary mixer to uniformly disperse each of the active materials, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Comparative Example 4)

As a positive electrode active material, prepared was lithium-containing nickel cobalt manganese composite oxide LiNi_{0.6}Co_{0.2}Mn_{0.2}O₂ formed of secondary particles and originally having voids. The average secondary particle size was 12 µm for the prepared active material in the form of secondary particles having voids, while the average primary particle size was 0.5 µm. The ratio G/H between an average distance G between primary particles inside the secondary particle originally having the voids and an average primary particle size H configuring the secondary particle was 1.1 at the preparation stage. As another positive electrode active material, LiNi_{0.6}Co_{0.2}Mn_{0.2}O₂ formed only of primary particles was prepared. The primary particle size of the prepared positive electrode active material in the form of the primary particles was 0.5 µm. Acetylene black as electro-conductive agent and polyvinylidene fluoride as binder were prepared. The positive electrode active material in the form of secondary particles, positive electrode active material in the form of primary particles, electro-conductive agent, and binder were dissolved and mixed in NMP at a weight ratio of 70:20:5:5, to prepare a paste.

The prepared paste was mixed with a planetary mixer to uniformly disperse each of the active materials, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Comparative Example 5)

As a first active material, lithium-containing nickel cobalt manganese composite oxide LiNi_{0.6}Co_{0.2}Mn_{0.2}O₂ formed of secondary particles was prepared. As a second active material, lithium-containing spinel manganese oxide LiMn₂O₄ formed of primary particles was prepared. The average secondary particle size of the prepared first active material was 12 µm, while the average primary particle size was 0.5 µm. The average primary particle size of the prepared second active material was 4 µm. Acetylene black as electro-conductive agent, and polyvinylidene fluoride as binder were prepared. The first active material, second active material, electro-conductive agent, and binder were dissolved and mixed in NMP at a weight ratio of 80:10:5:5, to prepare a paste.

The prepared paste was mixed with a planetary mixer to uniformly disperse the first active material, second active material, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Comparative Example 6)

As a first active material, lithium-containing nickel cobalt manganese composite oxide LiNi_{0.6}Co_{0.2}Mn_{0.2}O₂ formed of secondary particles was prepared. As a second active material, lithium-containing olivine iron oxide LiFePO₄ formed of primary particles was prepared. The average secondary particle size of the prepared first active material was 12 µm, while the average primary particle size was 0.5 µm. The average primary particle size of the prepared second active material was 3 µm. Acetylene black as electro-conductive agent, and polyvinylidene fluoride as binder were prepared. The first active material, second active material, electro-conductive agent, and binder were dissolved and mixed in NMP at a weight ratio of 80:10:5:5, to prepare a paste.

The prepared paste was mixed with a planetary mixer to uniformly disperse the first active material, second active material, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Comparative Example 7)

As a first active material, lithium-containing nickel cobalt manganese composite oxide LiNi_{0.6}Co_{0.2}Mn_{0.2}O₂ formed of secondary particles was prepared. As a second active material, lithium-containing cobalt oxide LiCoO₂ formed of primary particles was prepared. The average secondary particle size of the prepared first active material was 12 µm, while the average primary particle size was 0.5 µm. The average primary particle size of the prepared second active material was 6 µm. Acetylene black as electro-conductive agent, and polyvinylidene fluoride as binder were prepared. The first active material, second active material, electro-conductive agent, and binder were dissolved and mixed in NMP at a weight ratio of 80:10:5:5, to prepare a paste.

The prepared paste was mixed with a planetary mixer to uniformly disperse the first active material, second active material, electro-conductive agent, and binder, whereby a paste-form dispersion liquid was obtained. Then, the paste-form dispersion liquid was uniformly applied as a positive electrode coating fluid onto both of reverse surfaces of a current collector made of a strip-shaped aluminum foil. The applied coat of the positive electrode coating fluid was dried to form a positive electrode active material-containing layer. A strip-formed body obtained after drying was press-molded, and thereafter the strip-formed body was cut to predetermined dimensions. A current collecting tab was welded thereto to obtain a positive electrode.

A battery was produced by the same method as in Example 1 except for the production of the positive electrode.

### (Comparative Example 8)

A positive electrode was produced by the same method as in Comparative Example 1. A negative electrode was produced by the same method as in Example 15.

A battery was produced by the same method as in Comparative Example 1 except for the production of the positive electrode and the negative electrode.

### (Comparative Example 9)

A positive electrode was produced by the same method as in Comparative Example 1. A negative electrode was produced by the same method as in Example 16.

A battery was produced by the same method as in Comparative Example 1 except for the production of the positive electrode and the negative electrode.

### (Comparative Example 10)

A positive electrode was produced by the same method as in Comparative Example 1. A negative electrode was produced by the same method as in Example 17.

A battery was produced by the same method as in Comparative Example 1 except for the production of the positive electrode and the negative electrode.

### <Measurement>

In accordance with the procedure explained above, with regard of the positive electrode, a particle size distribution measurement by a laser diffraction scattering method, a pore size diameter distribution measurement by a mercury porosimetry, cross-sectional photographing with an SEM, and a measurement of an average particle strength of secondary particles of the NCM active material were performed. A ratio C/F between a particle size ratio C and a vacancy ratio F was calculated based on the particle size ratio C (a ratio A/B between a maximum frequency A and a local maximum frequency B) obtained by the particle size distribution measurement and the vacancy ratio F (a ratio D/E between a pore volume D and a void fraction E) obtained by the pore size diameter distribution measurement. Results of the cross-sectional photographing with the SEM were analyzed, and an average distance G between primary particles and an average primary particle size H inside secondary particles having voids among the secondary particles of the NCM active material (the first secondary particles including a first void) was obtained. Based on the analysis results, the ratio G/H between the average distance G between primary particles and the average primary particle size H was calculated.

In Table 1 and Table 2 below, summarized are details of the positive electrode and details of the negative electrode in the battery obtained in each of the examples and the comparative examples, means used for controlling the particle states of the NCM active material (lithium-containing nickel cobalt manganese composite oxide) used in the positive electrode, and the particle states of the NCM active material in the positive electrode in the battery obtained as a result thereof. Specifically, summarized in Table 1 are the composition of the positive electrode active material used in each of the examples and the comparative examples, the average particle size of the secondary particles and the independent primary particles of the active material obtained by measurement of the positive electrode of the obtained battery, and the composition of the negative electrode active material. Summarized in Table 2 are the treatment method used for controlling the particle states of the NCM active material of the positive electrode and the obtained particle states in each of the examples and the comparative examples. In the tables, the symbol "-" denotes "not applicable" to the subject item.

**[Table 1]**

| [Table 1] | First Active Material of Positive Electrode | | | Second Active Material of Positive Electrode | | Active Material of Negative Electrode |
|---|---|---|---|---|---|---|
| | Composition | Average Particle Size of Secondary Particles (µm) | Average Particle Size of Independent Primary Particles (µm) | Composition | Average Particle Size of Primary Particles (µm) | Composition |
| Example 1 | LiNi_{0.6}Co_{0.2}Mn_{0.2}O₂ | 11.3 | 0.5 | - | - | MCF |
| Example 2 | LiNi_{0.6}Co_{0.2}Mn_{0.2}O₂ | 11.6 | 0.5 | - | - | MCF |
| Example 3 | LiNi_{0.6}Co_{0.2}Mn_{0.2}O₂ | 11 | 0.5 | - | - | MCF |
| Example 4 | LiNi_{0.6}Co_{0.2}Mn_{0.2}O₂ | 11.3 | 0.5 | - | - | MCF |
| Example 5 | LiNi_{0.6}Co_{0.2}Mn_{0.2}O₂ | 11.3 | 0.5 | - | - | MCF |
| Example 6 | LiNi_{0.6}Co_{0.2}Mn_{0.2}O₂ | 11.3 | 0.5 | - | - | MCF |
| Example 7 | LiNi_{0.6}Co_{0.2}Mn_{0.2}O₂ | 11.3 | 0.5 | - | - | MCF |
| Example 8 | LiNi_{0.5}Co_{0.2}Mn_{0.3}O₂ | 11.3 | 0.5 | - | - | MCF |
| Example 9 | LiNi_{1/3}Co_{1/3}Mn_{1/3}O₂ | 11.3 | 0.5 | - | - | MCF |
| Example10 | LiNi_{0.7}Co_{0.15}Mn_{0.15}O₂ | 11.3 | 0.5 | - | - | MCF |
| Example11 | LiNi_{0.8}Co_{0.1}Mn_{0.1}O₂ | 11.3 | 0.5 | - | - | MCF |
| Example12 | LiNi_{0.6}Co_{0.2}Mn_{0.2}O₂ | 11.5 | 0.5 | LiMn₂O₄ | 4 | MCF |
| Example13 | LiNi_{0.6}Co_{0.2}Mn_{0.2}O₂ | 11.5 | 0.5 | LiFePO₄ | 3 | MCF |
| Example14 | LiNi_{0.6}Co_{0.2}Mn_{0.2}O₂ | 11.5 | 0.5 | LiCoO₂ | 6 | MCF |
| Example15 | LiNi_{0.6}Co_{0.2}Mn_{0.2}O₂ | 11.3 | 0.5 | - | - | TiO₂ (B) |
| Example16 | LiNi_{0.6}Co_{0.2}Mn_{0.2}O₂ | 11.3 | 0.5 | - | - | TiNb₂O₇ |
| Example17 | LiNi_{0.6}Co_{0.2}Mn_{0.2}O₂ | 11.3 | 0.5 | - | - | L₄Ti₅O₁₂ |
| Comparative Example 1 | LiNi_{0.6}Co_{0.2}Mn_{0.2}O₂ | 11.9 | - | - | - | MCF |
| Comparative Example 2 | LiNi_{0.6}Co_{0.2}Mn_{0.2}O₂ | 11.3 | 0.5 | - | - | MCF |
| Comparative Example 3 | LiNi_{0.6}Co_{0.2}Mn_{0.2}O₂ | 11.9 | 0.5 | - | - | MCF |
| Comparative Example 4 | LiNi_{0.6}Co_{0.2}Mn_{0.2}O₂ | 11.9 | 0.5 | - | - | MCF |
| Comparative Example 5 | LiNi_{0.6}Co_{0.2}Mn_{0.2}O₂ | 11.9 | - | LiMn₂O₄ | 4 | MCF |
| Comparative Example 6 | LiNi_{0.6}Co_{0.2}Mn_{0.2}O₂ | 11.9 | - | LiFePO₄ | 3 | MCF |
| Comparative Example 7 | LiNi_{0.6}Co_{0.2}Mn_{0.2}O₂ | 11.9 | - | LiCoO₂ | 6 | MCF |
| Comparative Example 8 | LiNi_{0.6}Co_{0.2}Mn_{0.2}O₂ | 11.9 | - | - | - | TiO₂ (B) |
| Comparative Example 9 | LiNi_{0.6}Co_{0.2}Mn_{0.2}O₂ | 11.9 | - | - | - | TiNb₂O₇ |
| Comparative Example10 | LiNi_{0.6}Co_{0.2}Mn_{0.2}O₂ | 11.9 | - | - | - | L₄Ti₅O₁₂ |

**[Table 2]**

| [Table 2] | Treatment Method Used to Control State of Particles of NCM Active Material of Positive Electrode | State of Particles of NCM Active Material in Positive Electrode |
|---|---|---|
| Example 1 | Wet beads mill dispersion of paste containing secondary particles + Sonication treatment of obtained dispersion | Primary Particles + First Secondary Particles + Second Secondary Particles |
| Example 2 | Jet mill dispersion of paste containing secondary particles + Sonication treatment of obtained dispersion | Primary Particles + First Secondary Particles + Second Secondary Particles |
| Example 3 | Mixing of mixed powder containing secondary particles with dry beads mill + Sonication treatment of paste containing mixed powder | Primary Particles + First Secondary Particles + Second Secondary Particles |
| Example 4 | Wet beads mill dispersion of paste containing secondary particles + Pressing treatment of Electrode Reel | Primary Particles + First Secondary Particles + Second Secondary Particles |
| Example 5 | Wet beads mill dispersion of paste containing secondary particles + Pressing treatment of Electrode Coil | Primary Particles + First Secondary Particles + Second Secondary Particles |
| Example 6 | Wet beads mill dispersion of paste containing secondary particles + Pressing treatment of Battery | Primary Particles + First Secondary Particles + Second Secondary Particles |
| Example 7 | Wet beads mill dispersion of paste containing secondary particles + Break-in Charge-discharge at low SOC | Primary Particles + First Secondary Particles + Second Secondary Particles |
| Example 8 | Wet beads mill dispersion of paste containing secondary particles + Sonication treatment of obtained dispersion | Primary Particles + First Secondary Particles + Second Secondary Particles |
| Example 9 | Wet beads mill dispersion of paste containing secondary particles + Sonication treatment of obtained dispersion | Primary Particles + First Secondary Particles + Second Secondary Particles |
| Example10 | Wet beads mill dispersion of paste containing secondary particles + Sonication treatment of obtained dispersion | Primary Particles + First Secondary Particles + Second Secondary Particles |
| Example11 | Wet beads mill dispersion of paste containing secondary particles + Sonication treatment of obtained dispersion | Primary Particles + First Secondary Particles + Second Secondary Particles |
| Example12 | Wet beads mill dispersion of paste containing secondary particles + Sonication treatment of obtained dispersion | Primary Particles + First Secondary Particles + Second Secondary Particles |
| Example13 | Wet beads mill dispersion of paste containing secondary particles + Sonication treatment of obtained dispersion | Primary Particles + First Secondary Particles + Second Secondary Particles |
| Example14 | Wet beads mill dispersion of paste containing secondary particles + Sonication treatment of obtained dispersion | Primary Particles + First Secondary Particles + Second Secondary Particles |
| Example15 | Wet beads mill dispersion of paste containing secondary particles + Sonication treatment of obtained dispersion | Primary Particles + First Secondary Particles + Second Secondary Particles |
| Example16 | Wet beads mill dispersion of paste containing secondary particles + Sonication treatment of obtained dispersion | Primary Particles + First Secondary Particles + Second Secondary Particles |
| Example17 | Wet beads mill dispersion of paste containing secondary particles + Sonication treatment of obtained dispersion | Primary Particles + First Secondary Particles + Second Secondary Particles |
| Comparative Example 1 | Mixing of paste containing secondary particles with planetary mixer | Second Secondary Particles |
| Comparative Example 2 | Wet beads mill dispersion of paste containing secondary particles | Primary Particles + Second Secondary Particles |
| Comparative Example 3 | Mixing of paste containing secondary particles and primary particles with planetary mixer | Primary Particles + Second Secondary Particles |
| Comparative Example 4 | Mixing of paste containing secondary particles already having voids and primary particles with planetary mixer | Primary Particles + First Secondary Particles |
| Comparative Example 5 | Mixing of paste containing secondary particles with planetary mixer | Second Secondary Particles |
| Comparative Example 6 | Mixing of paste containing secondary particles with planetary mixer | Second Secondary Particles |
| Comparative Example 7 | Mixing of paste containing secondary particles with planetary mixer | Second Secondary Particles |
| Comparative Example 8 | Mixing of paste containing secondary particles with planetary mixer | Second Secondary Particles |
| Comparative Example 9 | Mixing of paste containing secondary particles with planetary mixer | Second Secondary Particles |
| Comparative Example10 | Mixing of paste containing secondary particles with planetary mixer | Second Secondary Particles |

In Examples 1 to 17, at the preparation stage, primary particles of the NCM active material were not used and only secondary particles thereof were used. As indicated in Table 2, the positive electrode of the obtained battery included independent primary particles of the NCM active material, secondary particles including voids (first secondary particles), and secondary particles not including voids of a size equal to or greater than the aforementioned voids (second secondary particles) . It is presumed that the primary particles of the NCM active material were obtained by dispersing the paste containing the NCM active material particles using wet beads milling or jet milling, or mixing a mix powder including the NCM active material particles using dry beads milling. It is also presumed that the first secondary particles including the first voids were obtained by further performing the ultrasonic treatment, the pressurizing treatment, or the break-in charge-discharge.

Also in Comparative Example 2, at the preparation stage, primary particles of the NCM active material were not used and only secondary particles thereof were used. As indicated in Table 2, the positive electrode in the obtained battery included primary particles of the NCM active material, and densely packed secondary particles not having any void of a significant size (second secondary particles) . It is presumed that the primary particles of the NCM active material were obtained by dispersing the paste containing the NCM active material particles using wet beads milling. On the other hand, in Comparative Example 1 and Comparative Examples 3 to 10 in which the paste containing the NCM active material particles were mixed using a planetary mixer, the particle states of the NCM active material in the positive electrode included in the obtained battery did not change from the preparation stage.

Table 3 indicates the particle size ratio C, the vacancy ratio F, the ratio C/F, the ratio G/H, and the average particle strength of the secondary particles in the NCM active material obtained in each of the examples and the comparative examples.

**[Table 3]**

| [Table 3] | Positive Electrode | | | | |
|---|---|---|---|---|---|
| | C/F (g/mL) | Particle Size Ratio C (%/%) | Vacancy Ratio F (mL/g) | G/H (µm/µm) | Average Particle Strength of Secondary Particles of NCM Active Material (MPa) |
| Example 1 | 36.7 | 13.2 | 0.36 | 1.12 | 90 |
| Example 2 | 43.9 | 14.5 | 0.33 | 1.18 | 120 |
| Example 3 | 31.6 | 12 | 0.38 | 1.06 | 70 |
| Example 4 | 37.7 | 13.2 | 0.35 | 1.13 | 80 |
| Example 5 | 38.8 | 13.2 | 0.34 | 1.14 | 100 |
| Example 6 | 40 | 13.2 | 0.33 | 1.16 | 110 |
| Example 7 | 33.8 | 13.2 | 0.39 | 1.08 | 55 |
| Example 8 | 36.7 | 13.2 | 0.36 | 1.12 | 90 |
| Example 9 | 36.7 | 13.2 | 0.36 | 1.12 | 90 |
| Example10 | 36.7 | 13.2 | 0.36 | 1.12 | 90 |
| Example11 | 36.7 | 13.2 | 0.36 | 1.12 | 90 |
| Example12 | 38.8 | 12.8 | 0.33 | 1.14 | 90 |
| Example13 | 39.1 | 12.5 | 0.32 | 1.15 | 90 |
| Example14 | 39.7 | 13.5 | 0.34 | 1.15 | 90 |
| Example15 | 36.7 | 13.2 | 0.36 | 1.12 | 90 |
| Example16 | 36.7 | 13.2 | 0.36 | 1.12 | 90 |
| Example17 | 36.7 | 13.2 | 0.36 | 1.12 | 90 |
| Comparative Example 1 | 63 | 17 | 0.27 | - | 150 |
| Comparative Example 2 | 59.3 | 16 | 0.27 | - | 120 |
| Comparative Example 3 | 60 | 16.2 | 0.27 | - | 120 |
| Comparative Example 4 | 50.6 | 16.2 | 0.32 | 1.1 | 90 |
| Comparative Example 5 | 60 | 16.8 | 0.28 | - | 150 |
| Comparative Example 6 | 59.6 | 16.7 | 0.28 | - | 150 |
| Comparative Example 7 | 61.8 | 17.3 | 0.28 | - | 150 |
| Comparative Example 8 | 63 | 17 | 0.27 | - | 150 |
| Comparative Example 9 | 63 | 17 | 0.27 | - | 150 |
| Comparative Example10 | 63 | 17 | 0.27 | - | 150 |

### <Evaluation of Battery Performance>

### (Charge and Discharge)

The nonaqueous electrolyte batteries produced in Examples 1 to 14 and Comparative Examples 1 to 7 were subjected to a constant current charge to 4.3 V at a current value of 0.2C under a temperature condition of 25°C, and then subjected to a constant voltage charge. Thereafter, when the current value became 0.01C, the charge was terminated. Then, after the battery was maintained in a high temperature, the battery was returned to a temperature environment of 25°C and maintained for five hours. Then, the battery was subjected to a constant current discharge to 3.0 V at a current value of 1C, and the capacity obtained at that time was defined as a test capacity.

The nonaqueous electrolyte batteries produced in Examples 15 to 17 and Comparative Examples 8 to 10 were subjected to a constant current charge to 2.8 V at a current value of 0.2C under a temperature condition of 25°C, and then subjected to a constant voltage charge. Thereafter, when the current value became 0.01C, the charge was terminated. Then, after the battery was maintained in a high temperature, the battery was returned to a temperature environment of 25°C and maintained for five hours. Then, the battery was subjected to a constant current discharge to 1.5 V at a current value of 1C, and the discharge capacity obtained at that time was defined as a test capacity.

### (High Rate Output Performance)

To evaluate the output performance of the nonaqueous electrolyte batteries obtained by each of the examples and the comparative examples, a large current discharge test was performed as described below.

The batteries produced in Examples 1 to 14 and Comparative Examples 1 to 7 were continuously discharged to 3.0 V at a predetermined current value from the state of a charging rate of 100% (SOC 100%) under a temperature condition of 25°C. Each battery was subjected to a discharge at a current value of 1C and a discharge at a current value of 10C. The ratio C_{(10C)}/C_{(1C)} of a discharge capacity C_{(10C)} when discharged at the high current value of 10C to a discharge capacity C_{(1C)} obtained at the discharge at the current value of 1C was obtained as a large current discharge capacity ratio.

The batteries produced in Examples 15 to 17 and Comparative Examples 8 to 10 were continuously discharged to 1.5 V at a predetermined current value from the state of a charging rate of 100% (SOC 100%) under a temperature condition of 25°C. Each battery was subjected to a discharge at a current value of 1C and a discharge at a current value of 10C. The ratio C_{(10C)}/C_{(1C)} of a discharge capacity C_{(10C)} when discharged at the high current value of 10C to a discharge capacity C_{(1C)} obtained at the discharge at the current value of 1C was obtained as a large current discharge capacity ratio.

### (Cycle Performance)

To evaluate the durability of the nonaqueous electrolyte battery obtained by each of the examples and the comparative examples, a cycling test was performed as described below.

The batteries produced in Examples 1 to 14 and Comparative Examples 1 to 7 were subjected to repeated charge and discharge within a voltage range of 4.3 V to 3.0 V under a temperature condition of 45°C, and a rate of increase in battery resistance from before to after the repeated charge and discharge was obtained. First, at 25°C, each battery was discharged from the state of a charging rate of 50% (SOC 50%) at a current value of 10C, and a battery resistance value R_{(0 cyc)} was calculated from a difference between an open-circuit voltage (OCV) before starting the discharge and a battery voltage ten seconds after the discharge. Then, a 2C/2C cycling test was performed, in which charge was performed at a current value of 2C and discharge was performed at a current value of 2C within the above voltage range at 45°C. In the 2C/2C cycling test, performing of charge once to performing of discharge once was defined as one charge-discharge cycle, and 500 cycles of the charge and discharge were performed. In the same manner as in the measurement of the resistance value R_{(0 cyc)} before the cycling test, a battery resistance value R_{(500 cyc)} after 500 cycles was measured. A resistance increase rate R_{(500 cyc)}/R_{(0 cyc)} was obtained from the resistance values measured before and after performing the cycling test.

The batteries produced in Examples 15 to 17 and Comparative Examples 8 to 10 were subjected to repeated charge and discharge within a voltage range of 2.8 V to 1.5 V under a temperature condition of 45°C, and a rate of increase in battery resistance from before to after the repeated charge and discharge was obtained. First, at 25°C, each battery was discharged from the state of a charging rate of 50% (SOC 50%) at a current value of 10C, and a battery resistance value R_{(0 cyc)} was calculated from a difference between an open-circuit voltage (OCV) before starting the discharge and a battery voltage ten seconds after the discharge. Then, a 2C/2C cycling test was performed, in which charge was performed at a current value of 2C and discharge was performed at a current value of 2C within the above voltage range at 45°C. In the 2C/2C cycling test, performing of charge once to performing of discharge once was defined as one charge-discharge cycle, and 500 cycles of the charge and discharge were performed. In the same manner as in the measurement of the resistance value R_{(0 cyc)} before the cycling test, a battery resistance value R_{(500 cyc)} after 500 cycles was measured. A resistance increase rate R_{(500 cyc)}/R_{(0 cyc)} was obtained from the resistance values measured before and after performing the cycling test.

Table 4 summarizes the battery capacity (test capacity), large current discharge capacity ratio (C_{(10C)}/C_{(1C)}), rate of increase in resistance (R_{(500 cyc)}/R_{(0 cyc)}) from before to after the 500 cycles of the cycling test, which were obtained for each example and each comparative examples.

**[Table 4]**

| [Table 4] | Battery Capacity (Ah) | Discharge Capacity Ratio C_{(10C)}/C_{(1C)} (%) | Resistance Increase Ratio R_{(500 cyc)}/R_{(0 cyc)} |
|---|---|---|---|
| Example 1 | 15.3 | 92 | 2.24 |
| Example 2 | 15.3 | 89 | 2.55 |
| Example 3 | 15.3 | 96 | 1.97 |
| Example 4 | 15.3 | 93 | 2.34 |
| Example 5 | 15.3 | 93 | 2.37 |
| Example 6 | 15.3 | 90 | 2.42 |
| Example 7 | 15.3 | 95 | 2.11 |
| Example 8 | 14.3 | 90 | 2.34 |
| Example 9 | 13.3 | 95 | 2.22 |
| Example10 | 15.9 | 89 | 2.38 |
| Example11 | 16.9 | 88 | 2.45 |
| Example12 | 14.6 | 94 | 2.35 |
| Example13 | 15.1 | 91 | 2.26 |
| Example14 | 15 | 90 | 2.29 |
| Example15 | 14.5 | 86 | 1.83 |
| Example16 | 15.2 | 86 | 1.85 |
| Example17 | 13.5 | 86 | 1.8 |
| Comparative Example 1 | 15.5 | 80 | 2.26 |
| Comparative Example 2 | 15.3 | 82 | 2.27 |
| Comparative Example 3 | 15.5 | 80 | 2.25 |
| Comparative Example 4 | 15.5 | 93 | 4.36 |
| Comparative Example 5 | 14.8 | 82 | 2.36 |
| Comparative Example 6 | 15.3 | 81 | 2.26 |
| Comparative Example 7 | 15.2 | 79 | 2.3 |
| Comparative Example 8 | 14.7 | 75 | 1.84 |
| Comparative Example 9 | 15.4 | 75 | 1.85 |
| Comparative Example10 | 13.7 | 75 | 1.81 |

As indicated in Table 4, between the nonaqueous electrolyte battery produced in each of the examples and the nonaqueous electrolyte battery produced in each of the comparative examples, battery capacities of the same degree were obtained. The reason that the battery capacities of Example 17 and Comparative Example 10 are somewhat lower than those of the other examples and comparative examples is considered to be due to use of lithium titanium oxide Li₄Ti₅O₁₂ having a relatively high potential as the negative electrode active material.

The large current discharge capacity ratios of the nonaqueous electrolyte batteries of Examples 1 to 17 were higher than the large current discharge capacity ratios of Comparative Examples 1 to 3 and Comparative Examples 5 to 10.

The resistance increase rate exhibited by each battery in the cycling test in Examples 1 to 14 was of the same degree as the resistance increase rate for Comparative Examples 1 to 3 and Comparative Examples 5 to 7. In all of Examples 1 to 14, Comparative Examples 1 to 3, and Comparative Examples 5 to 7, mesophase pitch-based carbon fiber (MCF), which is a carbonaceous material, was used as the negative electrode active material. The resistance increase rate in Examples 15 to 17 was of the same degree as the resistance increase rate for Comparative Examples 8 to 10. In each of Examples 15 to 17 and Comparative Examples 8 to 10, an oxide containing titanium was used as the negative electrode active material. From the results of the examples and the comparative examples using an oxide of titanium as the negative electrode active material, it is recognized that an oxide of titanium is preferable from the viewpoint of life performance. On the other hand, for Comparative Example 4, the resistance increase rate was notably higher as compared to the examples and the other comparative examples.

The reason that the large current capacity ratios in Comparative Examples 1 to 3 and Comparative Examples 5 to 10 were low is considered to be a result of the primary particles being packed densely in all of the secondary particles in the positive electrodes, whereby the dispersion of the lithium ions within the secondary particles had become rate-limiting. In contrast, the reason that the resistance increase rate in Comparative Example 4 was high is considered to have arisen from inclusion of voids in all of the secondary particles of the active material in the positive electrodes. It is considered that, since all secondary particles included voids, the contact area between the secondary particles and the electrolyte was large and accordingly side reactions were apt to occur, and as a result, the increase of the battery resistance had accelerated.

In summary, the nonaqueous electrolyte batteries of Examples 1 to 17, in which primary particles, first secondary particles including a first void, and densely packed second secondary particles that do not include a void of a size equal to or greater than the first void of lithium-containing nickel cobalt manganese composite oxide (lithium nickel cobalt manganese oxide) coexisted in the positive electrode, were excellent in all of the input-output performance, the energy density, and the life performance. In Comparative Examples 1 to 10, in which the positive electrode did not include all of primary particles, first secondary particles including a first void, and densely packed second secondary particles of lithium nickel cobalt manganese oxide, at least one of the input-output performance, energy density, and life performance was inferior.

The electrode according to at least one embodiment and example explained above includes an active material-containing layer containing electrode active material particles. The electrode active material particles include primary particles of an electrode active material including lithium nickel cobalt manganese oxide represented by LiₐNiₓCo_{y}Mn_{z}O₂, where 0.9 ≤ a ≤ 1.2, x + y + z = 1, first secondary particles formed of plural of the above primary particles that are agglomerated and including a first void, and second secondary particles formed of plural of the above primary particles that are agglomerated and not including a void of a size equal to or greater than the first void. A first particle diameter corresponding to a maximum frequency A in a particle size distribution of particles including the electrode active material particles is greater than a second particle diameter corresponding to a local maximum frequency B in a range of particle diameters of 0.1 µm or greater and less than 2 µm. Taking a ratio A/B between the maximum frequency A and the local maximum frequency B as a particle size ratio C, and a ratio D/E between a pore volume D in units of mL/g obtained by mercury porosimetry in the active material-containing layer and a void fraction E as a vacancy ratio F, a ratio C/F between the particle size ratio C and the vacancy ratio F is 10 g/mL or greater and less than 50 g/mL. A ratio G/H between an average distance G between the primary particles in the first secondary particles and an average particle size H of the primary particles included in the first secondary particles is 1.05 or greater and less than 1.2. According to the electrode having the above configuration, there can be realized a battery and battery pack excellent in all of input-output performance, energy density, and life performance.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. An electrode comprising an active material-containing layer containing electrode active material particles, the electrode active material particles comprising:
primary particles of an electrode active material including lithium nickel cobalt manganese oxide represented by LiₐNiₓCo_{y}Mn_{z}O₂, where 0.9 ≤ a ≤ 1.2, x + y + z = 1;
first secondary particles formed of plural of the primary particles that are agglomerated, and including a first void; and
second secondary particles formed of plural of the primary particles that are agglomerated, and not including a void of a size equal to or greater than the first void,
a first particle diameter corresponding to a maximum frequency A in a particle size distribution of particles including the electrode active material particles is greater than a second particle diameter corresponding to a local maximum frequency B in a range of particle diameters of 0.1 µm or greater and less than 2 µm,
a ratio C/F between a particle size ratio C and a vacancy ratio F is 10 g/mL or greater and less than 50 g/mL, where the particle size ratio C is a ratio A/B between the maximum frequency A and the local maximum frequency B, and the vacancy ratio F is a ratio D/E between a pore volume D in units of mL/g obtained by mercury porosimetry in the active material-containing layer and a void fraction E, and
a ratio G/H between an average distance G between the primary particles in the first secondary particles and an average particle size H of the primary particles included in the first secondary particles is 1.05 or greater and less than 1.2.

2. The electrode according to claim 1, wherein the first void is of a same size or larger than the primary particle.

3. The electrode according to claim 1 or 2, wherein the particle size ratio C is 5 or greater and less than 15.

4. The electrode according to any one of claims 1 to 3, wherein the vacancy ratio F is 0.35 mL/g or greater and less than 0.4 mL/g.

5. The electrode according to any one of claims 1 to 4, wherein an average particle size of active material secondary particles including the first secondary particles and the second secondary particles is 5 µm or greater and less than 14 µm.

6. The electrode according to any one of claims 1 to 5, wherein the average particle size H of the primary particles included in the first secondary particles is 0.4 µm or greater and less than 0.8 µm.

7. The electrode according to any one of claims 1 to 6, wherein an average particle strength of active material secondary particles including the first secondary particles and the second secondary particles is 50 Mpa or greater and less than 150 Mpa.

8. A battery comprising:
a positive electrode; and
a negative electrode,
wherein the positive electrode includes the electrode according to any one of claims 1 to 7.

9. The battery according to claim 8, wherein the negative electrode includes a graphitic material or a carbonaceous material.

10. The battery according to claim 8, wherein the negative electrode includes an oxide of titanium.

11. The battery according to claim 8, wherein the negative electrode includes lithium titanate represented by Li_{4+w}Ti₅O₁₂, where 0 ≤ w ≤ 3.

12. A battery pack comprising the battery according to any one of claims 8 to 11.
